# EUROPEAN PATENT APPLICATION

(11) **EP 4 716 150 A1**
(43) Date of publication of application: **25.03.2026**
(21) Application number: 25179622.3
(22) Date of filing: 28.05.2025
(51) Int. Cl.: H04L 9/08

(54) **KEY MANAGEMENT DEVICE, KEY MANAGEMENT METHOD, AND COMPUTER PROGRAM PRODUCT**

(30) Priority: 20.09.2024 JP 2024163408
(71) Applicant: Kabushiki Kaisha Toshiba, Tokyo 105-0023 (JP); Toshiba Digital Solutions Corporation, Kawasaki-shi, Kanagawa 212-0013 (JP)
(72) Inventor: MINAMI, Takahiro, Kawasaki-shi (JP); NAGASHIMA, Yuki, Kawasaki-shi (JP)
(74) Representative: Marks & Clerk LLP

(57) **Abstract**

A key management device according to an arrangement includes a global-key-generation unit, a management unit, a communication unit, and a supply unit. The global-key-generation unit is configured to generate a first-global key used for encryption or decryption of communication of an application, and store the first-global key shared with another key-management-device by encrypted transfer using QKD in a storage unit. The management unit is configured to check an expiration date of the first-global key in the storage unit, and update the first-global key with the expired expiration date to a revoked global key. The communication unit is configured to, when sharing a second-global key newly-generated by the global-key-generation unit with another key-management-device, encrypt the second-global key using the revoked global key, and transmit the encrypted second-global key to another key-management-device. The supply unit is configured to supply the second-global key to the application.

## Description

### FIELD

Arrangements described herein relate generally to a key management device, a key management method, and a computer program product.

### BACKGROUND

Quantum Key Distribution (QKD), which allows two distant sites to share an encryption key without leaking information to a third party (eavesdropper) having any theoretical computing capability by the use of the quantum mechanical properties of light, is conventionally known. An encryption key shared using QKD is used for cryptography communication between applications; however, the encryption key after the elapse of a certain period of time is not used for cryptography communication and deleted from a security risk perspective.

By a conventional technology, more effective utilization of shared encryption keys using QKD are not available.

### BRIEF DESCRIPTION OF THE DRAWINGS

Fig. 1 is a diagram illustrating an example of a configuration of a quantum cryptography communication system according to a first arrangement;
Fig. 2 is a diagram for describing an example of a functional configuration of a key management device according to the first arrangement;
Fig. 3 is a diagram illustrating a state of key management devices with shared local keys according to the first arrangement;
Fig. 4 is a diagram for describing an example of global key sharing processing according to the first arrangement;
Fig. 5 is a diagram for describing an example of the global key sharing processing according to the first arrangement;
Fig. 6 is a diagram for describing an example of the global key sharing processing according to the first arrangement;
Fig. 7 is a diagram for describing an example of the global key sharing processing according to the first arrangement;
Fig. 8 is a flowchart illustrating an example of processing on a transmission side for updating a global key to a revoked global key according to the first arrangement;
Fig. 9 is a diagram illustrating an example of a data structure of global key sharing information according to the first arrangement;
Fig. 10 is a diagram illustrating an example of a data structure of a global key (for encryption) according to the first arrangement;
Fig. 11 is a flowchart illustrating an example of processing on a reception side for updating a global key to a revoked global key according to the first arrangement;
Fig. 12 is a diagram illustrating an example of a data structure of global key (for decryption) according to the first arrangement;
Fig. 13 is a diagram illustrating a state of the key management devices according to the first arrangement, after performing the processing for updating a global key to a revoked global key;
Fig. 14 is a flowchart illustrating an example of processing on a transmission side for global key sharing using a revoked global key according to the first arrangement;
Fig. 15 is a flowchart illustrating an example of the processing 1 for global key sharing (transmission side) according to the first arrangement;
Fig. 16 is a diagram illustrating an example of a packet structure of a global key sharing request according to the first arrangement;
Fig. 17 is a flowchart illustrating an example of processing 2 for global key sharing (transmission side) according to the first arrangement;
Fig. 18 is a flowchart illustrating an example of processing for global key sharing (reception side) according to the first arrangement;
Fig. 19 is a diagram illustrating global key sharing processing using a revoked global key according to the first arrangement;
Fig. 20 is a diagram illustrating the global key sharing processing using a revoked global key according to the first arrangement;
Fig. 21 is a diagram illustrating the global key sharing processing using a revoked global key according to the first arrangement;
Fig. 22 is a diagram illustrating an example of a configuration of a quantum cryptography communication system according to a second arrangement;
Fig. 23 is a diagram illustrating a state of key management devices with shared local keys according to the second arrangement;
Fig. 24 is a diagram for describing an example of global key sharing processing according to the second arrangement;
Fig. 25 is a diagram for describing an example of the global key sharing processing according to the second arrangement;
Fig. 26 is a diagram for describing an example of the global key sharing processing according to the second arrangement;
Fig. 27 is a diagram for describing an example of the global key sharing processing according to the second arrangement;
Fig. 28 is a diagram for describing an example of the global key sharing processing according to the second arrangement;
Fig. 29 is a diagram for describing an example of the global key sharing processing according to the second arrangement;
Fig. 30 is a flowchart illustrating an example of processing on a transmission side for updating a global key to a revoked global key with relay according to the second arrangement;
Fig. 31 is a flowchart illustrating an example of processing on a relay side for updating a global key to a revoked global key with relay according to the second arrangement;
Fig. 32 is a flowchart illustrating an example of processing on a reception side for updating a global key to a revoked global key with relay according to the second arrangement;
Fig. 33 is a diagram illustrating a state of the key management device according to the second arrangement, after performing the processing for updating a global key to a revoked global key with relay;
Fig. 34 is a flowchart illustrating an example of processing on a transmission side for global key sharing (with relay) using a revoked global key according to the second arrangement;
Fig. 35 is a flowchart illustrating an example of processing 3 on a transmission side for global key sharing (with relay) according to the second arrangement;
Fig. 36 is a flowchart illustrating an example of processing 4 on a transmission side for global key sharing (with relay) according to the second arrangement;
Fig. 37 is a flowchart illustrating an example of processing on a relay side for global key sharing (with relay) according to the second arrangement;
Fig. 38 is a flowchart illustrating an example of processing on a reception side for global key sharing (with relay) according to the second arrangement;
Fig. 39 is a diagram illustrating the global key sharing processing (with relay) using a revoked global key according to the second arrangement;
Fig. 40 is a diagram illustrating an example of the global key sharing processing (with relay) using a revoked global key according to the second arrangement;
Fig. 41 is a diagram illustrating an example of the global key sharing processing (with relay) using a revoked global key according to the second arrangement;
Fig. 42 is a diagram illustrating an example of the global key sharing processing (with relay) using a revoked global key according to the second arrangement;
Fig. 43 is a flowchart illustrating an example of processing on a transmission side for updating a global key to a revoked global key without relay according to a third arrangement;
Fig. 44 is a flowchart illustrating an example of processing on a reception side for updating a global key to a revoked global key without relay according to the third arrangement;
Fig. 45 is a diagram illustrating a state of key management devices according to the third arrangement, after performing the processing for updating a global key to a revoked global key without relay;
Fig. 46 is a flowchart illustrating an example of processing on a transmission side for global key sharing (without relay) using a revoked global key according to the third arrangement;
Fig. 47 is a flowchart illustrating an example of processing 5 on a transmission side for global key sharing (without relay) according to the third arrangement;
Fig. 48 is a flowchart illustrating an example of processing on a reception side for global key sharing (without relay) according to the third arrangement;
Fig. 49 is a diagram illustrating the global key sharing processing (without relay) using a revoked global key according to the third arrangement;
Fig. 50 is a diagram illustrating the global key sharing processing (without relay) using a revoked global key according to the third arrangement;
Fig. 51 is a diagram illustrating the global key sharing processing (without relay) using a revoked global key according to the third arrangement;
Fig. 52 is a diagram illustrating an example of a hardware configuration of a QKD device according to the first to third arrangement; and
Fig. 53 is a diagram illustrating an example of a hardware configuration of the key management device according to the first to third arrangements.

### DETAILED DESCRIPTION

According to an arrangement, a key management device includes a global key generation unit, a management unit, a communication unit, and a supply unit. The global key generation unit is configured to generate a first global key used for encryption or decryption of communication of an application, and store the first global key shared with another key management device by encrypted transfer using quantum key distribution (QKD) in a storage unit. The management unit is configured to check an expiration date of the first global key stored in the storage unit, and update the first global key that is expired to a revoked global key. The communication unit is configured to, when sharing a second global key newly generated by the global key generation unit with another key management device, encrypt the second global key using the revoked global key, and transmit the second global key being encrypted to another key management device. The supply unit is configured to supply the second global key to the application.

Exemplary arrangements of a key management device, a key management method, and a computer program product will be explained below in detail with reference to the accompanying drawings. The present disclosure is not limited to the following arrangements.

### Example of Configuration

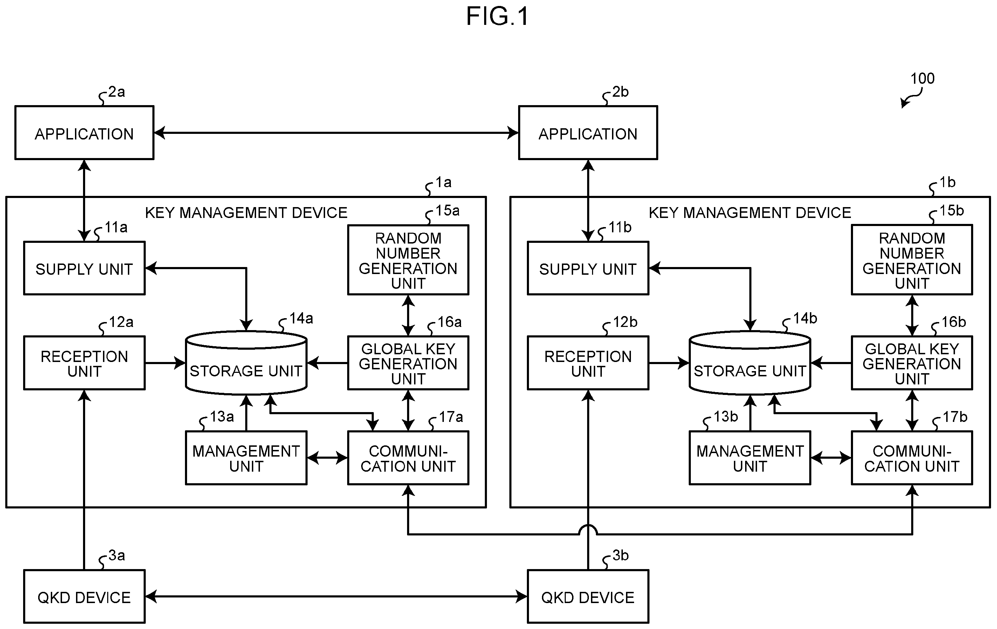

Fig. 1 is a diagram illustrating an example of a configuration of a quantum cryptography communication system 100 according to a first arrangement. The quantum cryptography communication system 100 according to the first arrangement includes key management devices 1a and 1b, applications 2a and 2b, and QKD devices 3a and 3b.

The key management device 1a according to the first arrangement includes a supply unit 11a, a reception unit 12a, a management unit 13a, a storage unit 14a, a random number generation unit 15a, a global key generation unit 16a, and a communication unit 17a. Similarly, the key management device 1b according to the first arrangement includes a supply unit 11b, a reception unit 12b, a management unit 13b, a storage unit 14b, a random number generation unit 15b, a global key generation unit 16b, and a communication unit 17b.

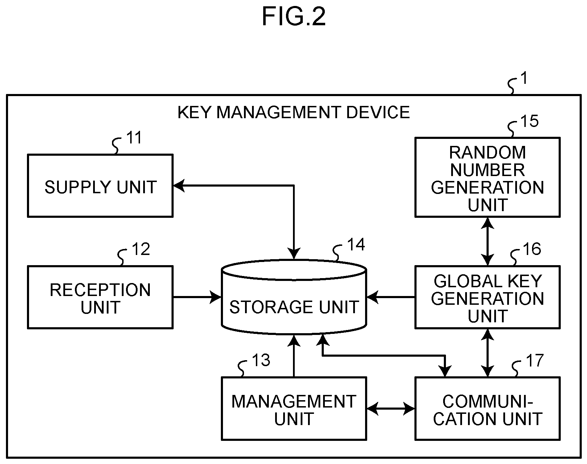

Fig. 1 describes an overview of the processing of the quantum cryptography communication system 100 according to the first arrangement. Note that the details of each function of the key management devices 1a and 1b will be described later using Fig. 2.

The QKD devices 3a and 3b share a local key by QKD. A local key is transmitted to the reception unit 12a of the key management device 1a and the reception unit 12b of the key management device 1b, and stored in each of the storage unit 14a of the key management device 1a and the storage unit 14b of the key management device 1b.

The global key generation unit 16a generates a global key using random numbers generated by the random number generation unit 15a. The global key in a state of being encrypted by the local key is transmitted from the communication unit 17a. The communication unit 17b decrypts the encrypted global key with the local key.

The global key shared between the key management devices 1a and 1b is used, for example, to encrypt communication in the application 2a and to decrypt encrypted communication in the application 2b. The global keys (encryption key/decryption key) shared between the key management devices 1a and 1b are saved in the storage units 14a and 14b, respectively.

The application 2a acquires the global key (for encryption) from the supply unit 11a of the key management device 1a. The application 2a encrypts application data using the global key (for encryption) with one time pad (OTP) or the like, and transmits it to the application 2b. The application 2b accesses the supply unit 11b of the key management device 1b to acquire the global key (for decryption) based on the encryption key information such as a key ID transmitted along with the encrypted data. The application 2b decrypts the encrypted application data using the global key (for decryption).

The key management device 1a, the application 2a, and the QKD device 3a operate at a site A, for example. In the following description, information, devices, and functional blocks related to the site A may be indicated with a symbol A. Similarly, the key management device 1b, the application 2b, and the QKD device 3b operate at a site B, for example. In the following description, information, devices, and functional blocks related to the site B may be indicated with a symbol B.

Hereafter, in a case where the key management devices 1a and 1b are not distinguished, they are simply referred to as a key management device 1. Similarly, in a case where the applications 2a and 2b are not distinguished, they are simply referred to as an application 2. Similarly, in a case where the QKD devices 3a and 3b are not distinguished, they are simply referred to as a QKD device 3.

Fig. 2 is a diagram for describing an example of a functional configuration of the key management device 1 according to the first arrangement. The key management device 1 according to the first arrangement includes a supply unit 11, a reception unit 12, a management unit 13, a storage unit 14, a random number generation unit 15, a global key generation unit 16, and a communication unit 17.

The supply unit 11 acquires global keys (encryption/decryption) from the storage unit 14 in response to a key acquisition request from the application 2, and supplies the acquired global keys.

The reception unit 12 receives the local keys shared by QKD between the QKD device 3a and the QKD device 3b. The reception unit 12 determines the use of the local keys by communicating with the reception unit 12 of the opposite key management device 1 via the communication unit 17, and saves the local keys in the storage unit 14 separately for encryption and for decryption.

The management unit 13 manages key information of the global keys. For example, the management unit 13 checks the expiration date of the global key and updates the global key that is expired to a revoked global key.

The storage unit 14 saves global key sharing information, local keys (for encryption/for decryption), and global keys (for encryption/for decryption). The storage unit 14 is realized by a combination of a main storage device such as a random access memory (RAM) and an auxiliary storage device such as a hard disk drive (HDD).

The random number generation unit 15 generates random numbers to be used as key data of the global keys, and supplies the random numbers to the global key generation unit 16.

The global key generation unit 16 generates global keys to be supplied to the application 2 and shares the global keys with the other key management device 1.

The communication units 17 are used when having communication between the key management devices 1. The communication units 17 also encrypt/decrypt the global key with the local key or revoked global key when having communication to share the global key between the key management devices 1.

The features of the key management device 1 according to the first arrangement are the processing of the management unit 13 and the communication unit 17.

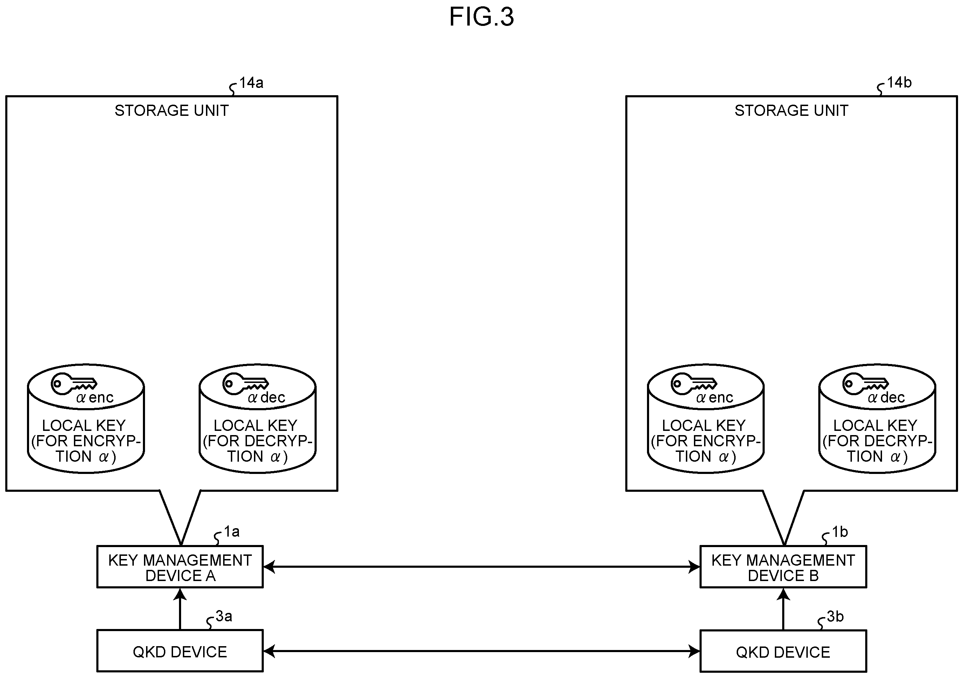

Fig. 3 is a diagram illustrating a state of the key management devices 1a and 1b with the shared local keys according to the first arrangement. The local keys shared by the QKD device 3a and the QKD device 3b are distinguished to be used for encryption α (αenc) and for decryption α (αdec) and saved in the storage unit 14a of the key management device 1a and the storage unit 14b of the key management device 1b.

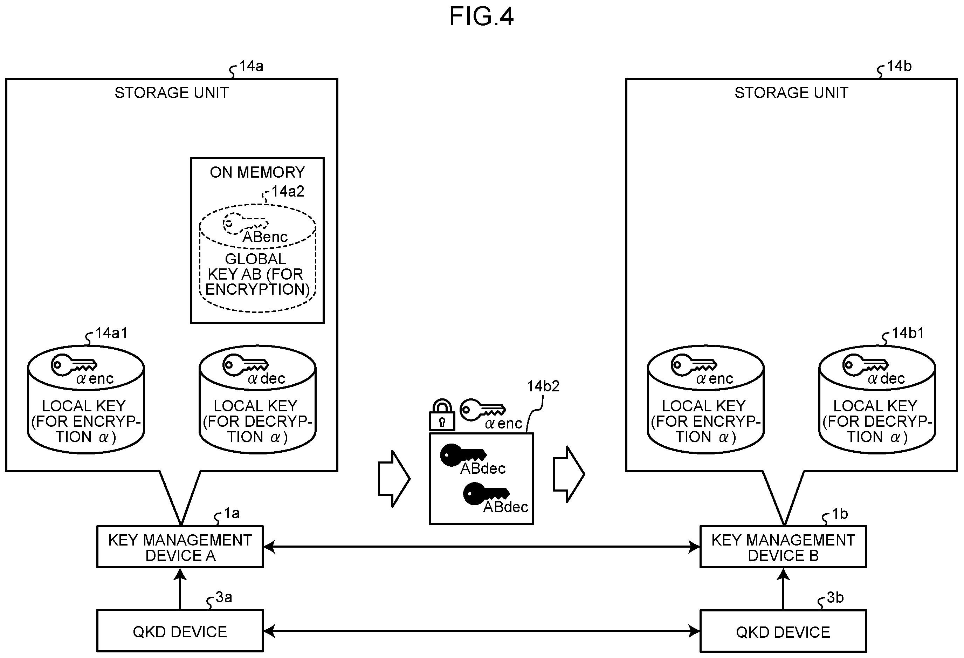

Fig. 4 is a diagram for describing an example of global key sharing processing according to the first arrangement. When sharing a global key with the key management device B1b, the global key generation unit 16 of the key management device A1a first creates a global key AB (for encryption) 14a2 (ABenc) on the memory (main storage device) of the key management device A1a.

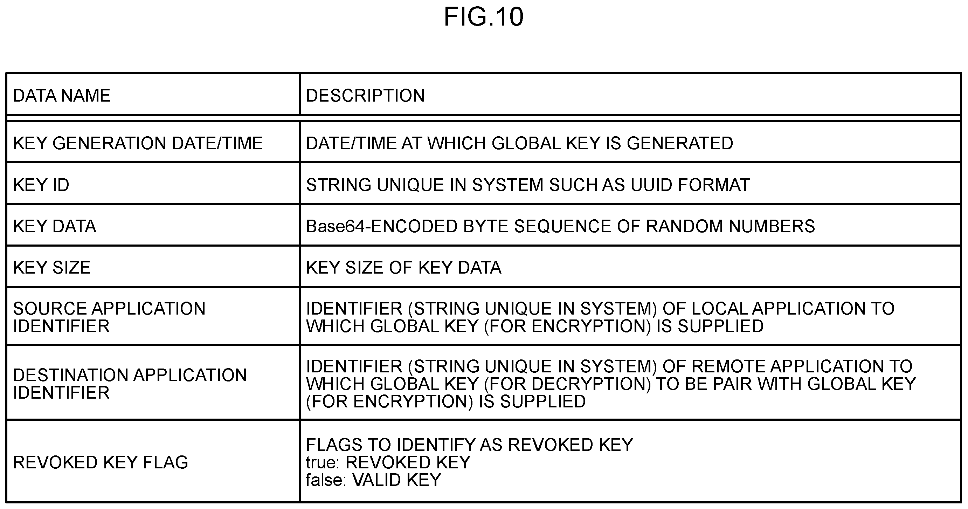

Next, the communication unit 17a encrypts the global key AB (for encryption) 14a2 using the local key (for encryption α) 14a1 by OTP or the like. The communication unit 17a transmits the encrypted global key AB (for encryption) 14a2 to the key management unit B1b as a global key AB (for decryption) 14b2 (ABdec) along with the encryption key information used for encryption (see Fig. 10 to be described later).

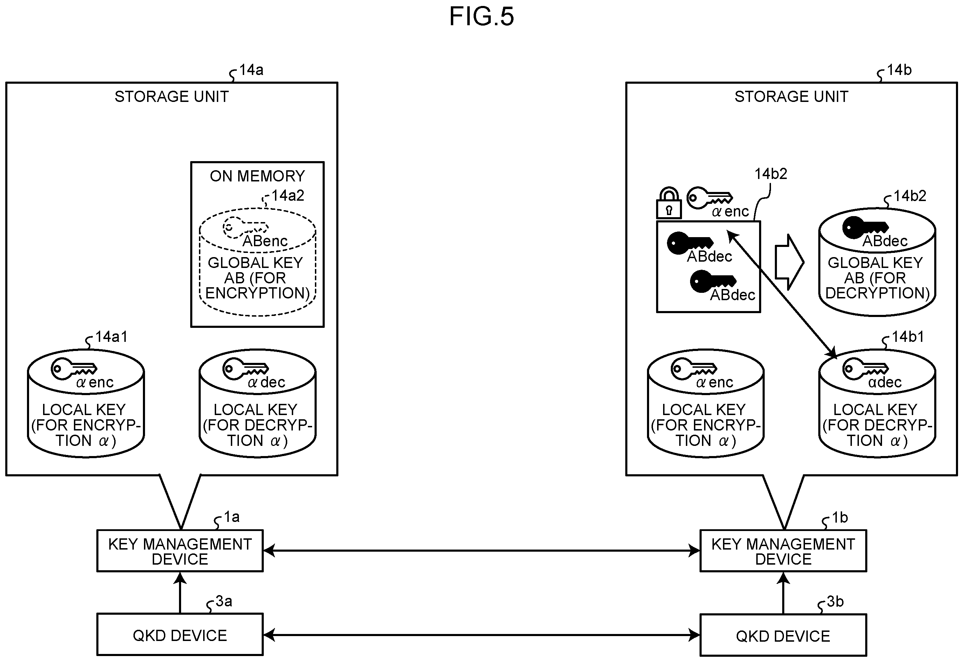

Fig. 5 is a diagram for describing an example of sharing processing of a global key (hereinafter also referred to as a global key AB when shared) according to the first arrangement. Then, the communication unit 17b of the key management device 1b decrypts the global key AB (for decryption) 14b2 using the local key (for decryption α) 14b1 based on the received encryption key information, and saves it in the storage unit 14b.

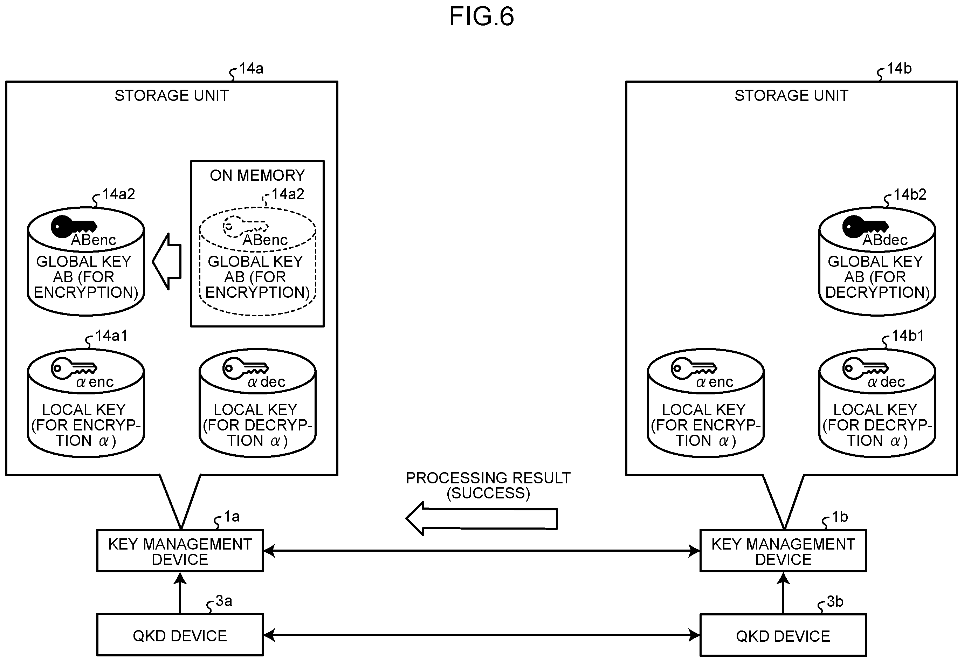

Fig. 6 is a diagram for describing an example of global key sharing processing according to the first arrangement. Next, the communication unit 17b of the key management device 1b transmits information to the key management device 1a indicating that saving processing of the global key AB (for decryption) 14b2 is successful. When the communication unit 17a of the key management device 1a receives the processing result (success) from the key management device B1b, the global key generation unit 16a saves the global key AB (for encryption) 14a2, which is stored on the memory, in a database (auxiliary storage device such as HDD) of the storage unit 14a.

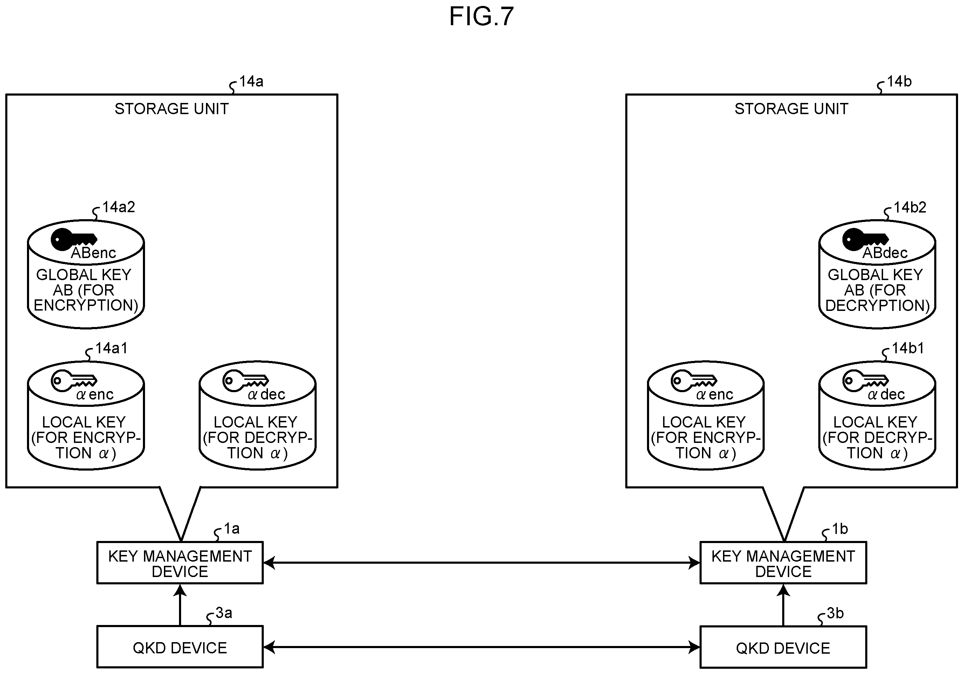

Fig. 7 is a diagram for describing an example of global key sharing processing according to the first arrangement. Fig. 7 illustrates the state when the global key AB (for encryption) 14a2 and the global key AB (for decryption) 14b2 are shared between the key management devices 1a and the key management device 1b.

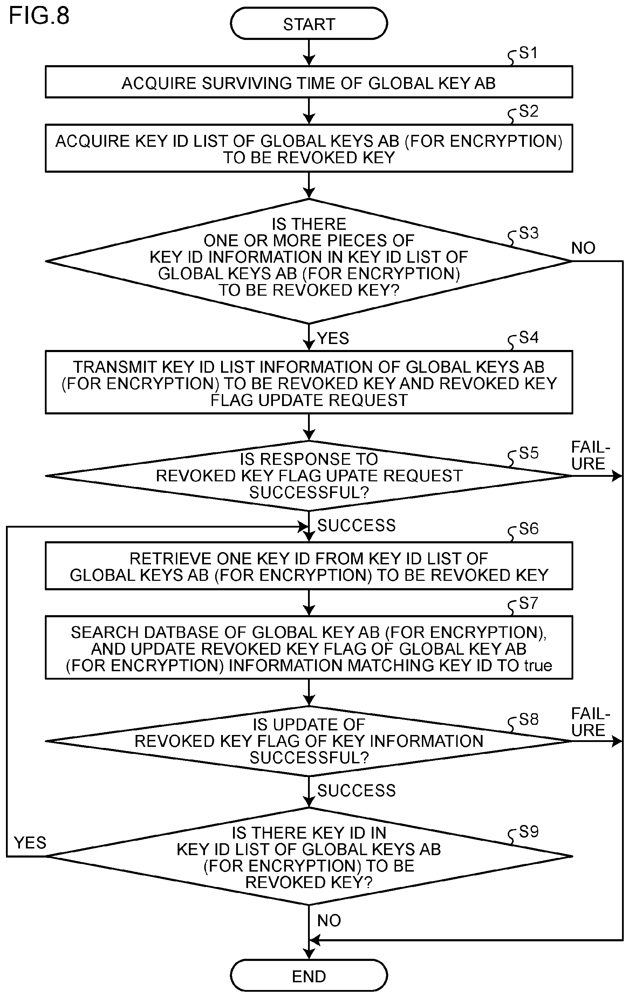

Fig. 8 is a flowchart illustrating an example of processing on a transmission side for updating a global key to a revoked global key according to the first arrangement. Fig. 8 illustrates an example of the processing on the key management device 1a side. The management unit 13a of the key management device 1a periodically executes the processing of Fig. 8.

First, the management unit 13a of the key management device 1a acquires the surviving time of a global key AB from the global key sharing information saved in the storage unit 14a (step S1).

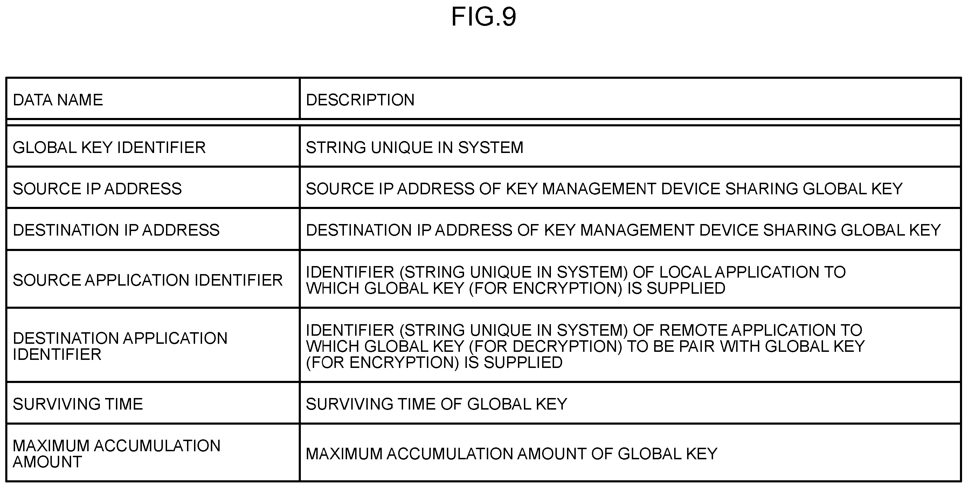

Fig. 9 is a diagram illustrating an example of a data structure of the global key sharing information according to the first arrangement. As illustrated in Fig. 9, the global key sharing information includes a global key identifier, a source IP address, a destination IP address, a source application identifier, a destination application identifier, surviving time, and maximum accumulation amount.

The global key identifier is a string that is unique in the system (refers to the quantum cryptography communication system 100, which also applies hereinafter).

The source IP address is the source IP address of the key management device 1 with which the global key is shared.

The destination IP address is the destination IP address of the key management device 1 with which the global key is shared.

The source application identifier is the identifier (a string unique in the system) of the local application 2 to which the global key (for encryption) is supplied.

The destination application identifier is the identifier (a string unique in the system) of the remote application 2 to which the global key (for decryption) as a pair with the global key (for encryption) is supplied.

The surviving time is indicative of the time to survive during which the global key is valid.

The maximum accumulation amount indicates the maximum accumulation amount of the global key.

Returning to Fig. 8, next, the management unit 13a acquires a list of key IDs of global keys that correspond to the revoked key (key generation date/time < current date/time - surviving time) from the database of the global key AB (for encryption) 14a2 saved in the storage unit 14a (step S2).

The management unit 13a proceeds to step S4 when there is one or more pieces of key ID information in the list of key IDs of the global keys AB (for encryption) that are to be the revoked key acquired at step S2 (Yes at step S3), and ends the processing if not (No at step S3).

The management unit 13a transmits the key ID list information of the global keys AB (for encryption) to be the revoked key and a revoked key flag update request to the key management device 1b via the communication unit 17a (step S4). Note that the key ID list information of the global keys AB (for encryption) to be the revoked key may be included in the revoked key flag update request, or may be transmitted separately from the revoked key flag update request.

Then, the management unit 13a receives a response to the revoked key flag update request from the key management device 1b via the communication unit 17a (step S5). The management unit 13a proceeds to step S6 when the response received at step S5 indicates success, and ends the processing when indicating failure.

The management unit 13a retrieves one piece of key ID information from the key ID list of the global keys AB (for encryption) to be the revoked key (step S6).

Next, the management unit 13a searches the database of the global key AB (for encryption) 14a2 (also referred to as the global key AB (for encryption) 14a2 information) saved in the storage unit 14a, and updates the revoked key flag of the key information that matches the key ID acquired at step S6 to true (step S7).

Fig. 10 is a diagram illustrating an example of the data structure of the global key AB (for encryption) 14a2 according to the first arrangement. The global key AB (for encryption) 14a2 according to the first arrangement includes the key generation date/time, key ID, key data, key size, source application identifier, destination application identifier, and revoked key flag.

The key generation date/time indicates the date and time at which the global key is generated.

The key ID is a string that is unique in the system, such as a universally unique identifier (UUID) format.

The key data is a Base64-encoded byte sequence of random numbers.

The key size indicates the key size of the key data.

The source application identifier is an identifier (a string unique in the system) of the local application to which the global key (for encryption) is supplied.

The destination application identifier is an identifier (a string unique in the system) of the remote application to which the global key (for decryption) as a pair with the global key (for encryption) is supplied.

The revoked key flag is a flag that identifies to be a revoked key (true: revoked key, false: valid key).

Returning to Fig. 8, at step S8, the management unit 13a proceeds to step S9 when update of the revoked key flag is successful, and ends the processing when unsuccessful.

The management unit 13a repeats the processing of steps S6 to S8 until there is no more key ID information in the key ID list of the global keys AB (for encryption) to be the revoked key (Yes at step S9), and ends the processing when there is no more key ID information (No at step S9).

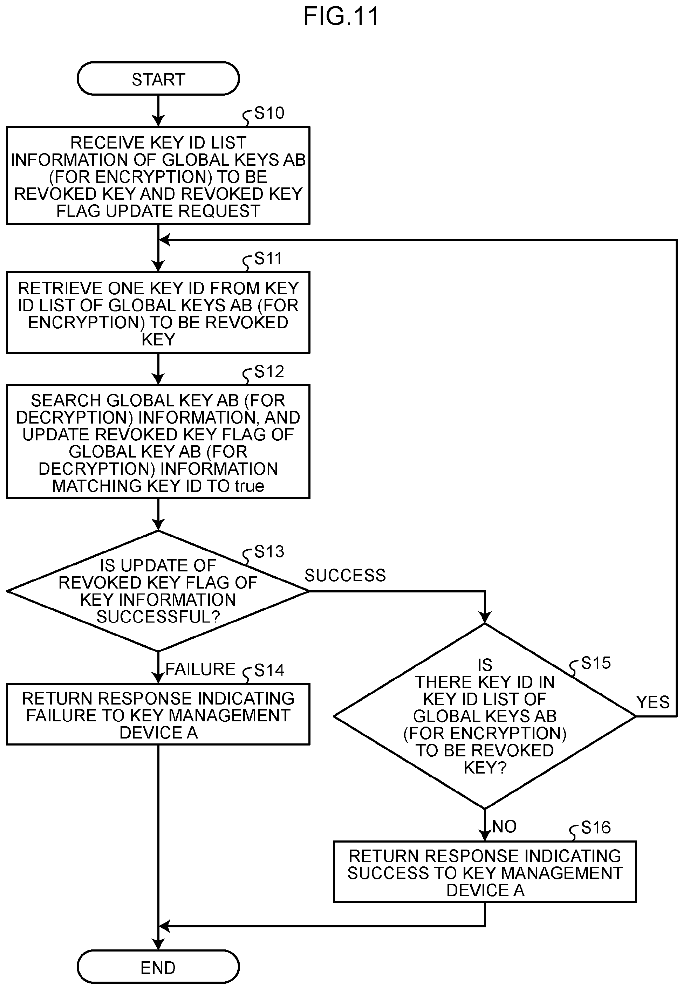

Fig. 11 is a flowchart illustrating an example of processing on a reception side for updating a global key to a revoked global key according to the first arrangement. Fig. 11 illustrates an example of the processing on the key management device 1b side.

First, the management unit 13b of the key management device 1b receives the key ID list information of the global keys AB (for encryption) to be the revoked key and a revoked key flag update request from the key management device 1a via the communication unit 17b (step S10).

Next, the management unit 13b retrieves one piece of key ID information from the key ID list of the global keys AB (for encryption) to be the revoked key (step S11).

Next, the management unit 13b searches the database of the global key AB (for decryption) 14b2 saved in the storage unit 14b, and updates the revoked key flag of the key information that matches the key ID acquired at step S11 to true (step S12).

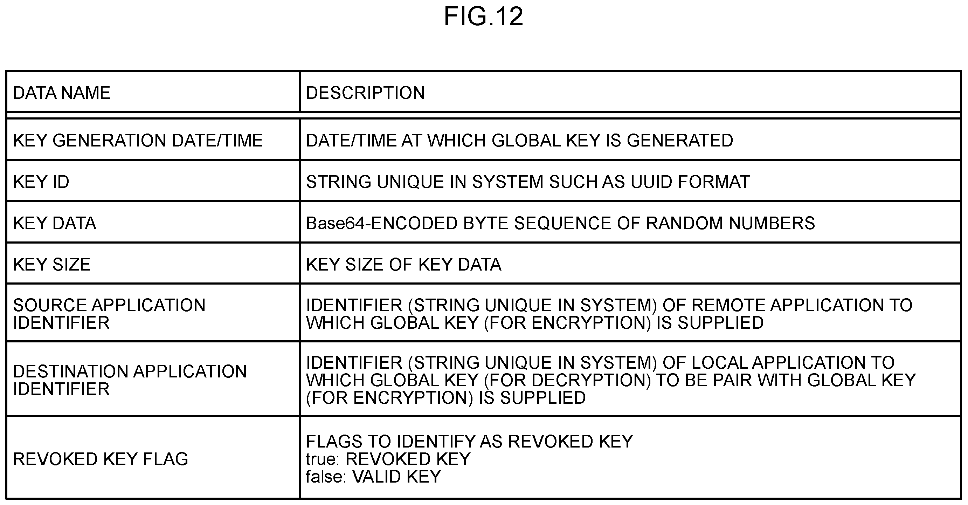

Fig. 12 is a diagram illustrating an example of the data structure of the global key AB (for decryption) 14b2 according to the first arrangement. The global key AB (for decryption) 14b2 according to the first arrangement includes the key generation date/time, key ID, key data, key size, source application identifier, destination application identifier, and revoked key flag.

The key generation date/time indicates the date and time at which the global key is generated.

The key ID is a string that is unique in the system, such as a UUID format.

The key data is a Base64-encoded byte sequence of random numbers.

The key size indicates the key size of the key data.

The source application identifier is an identifier (a string unique in the system) of the remote application to which the global key (for encryption) is supplied.

The destination application identifier is an identifier (a string unique in the system) of the local application to which the global key (for decryption) as a pair with the global key (for encryption) is supplied.

The revoked key flag is a flag that identifies to be a revoked key (true: revoked key, false: valid key).

Returning to Fig. 11, the management unit 13b proceeds to step S15 when update of the revoked key flag at step S13 is successful, while returning a response indicating failure to the key management device 1a (the key management device A) via the communication unit 17b and ending the processing when update of the revoked key flag is unsuccessful (step S14).

The management unit 13b repeats the processing of steps S11 to S14 until there is no more key ID information in the key ID list of the global keys AB (for encryption) to be the revoked key (Yes at step S15), and proceeds to step S16 when there is no more key ID information (No at step S15).

The management unit 13b returns a response indicating success to the key management device 1a (the key management device A) via the communication unit 17b (step S16), and ends the processing.

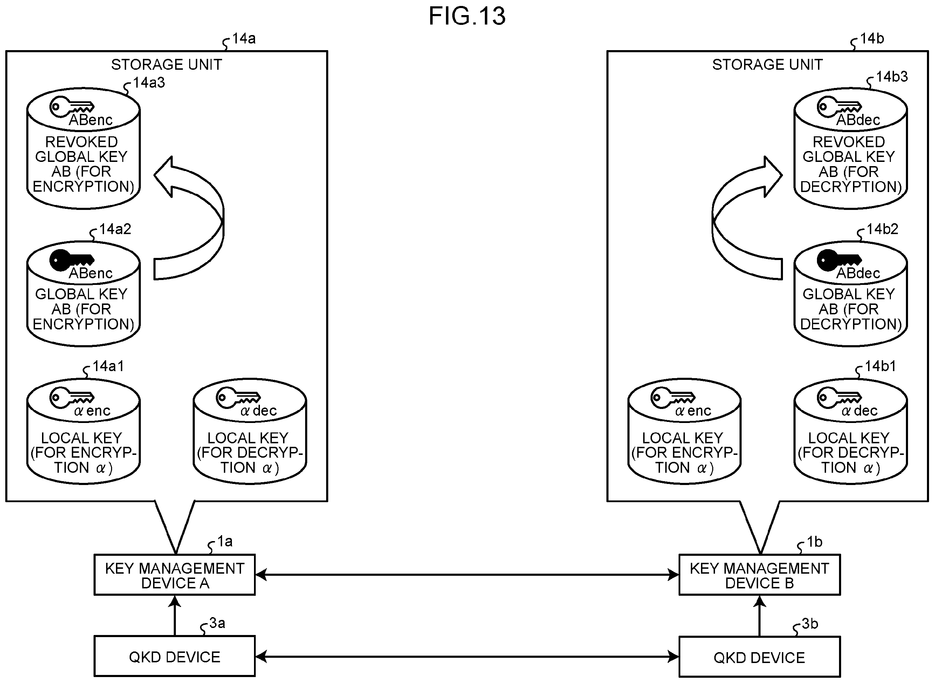

Fig. 13 is a diagram illustrating the state of the key management devices 1a and 1b according to the first arrangement, after performing the processing for updating the global key to the revoked global key. In the first arrangement, the revoked global key AB (for encryption) 14a3 and the revoked global key AB (for decryption) 14b3 are used for implementing new global key sharing.

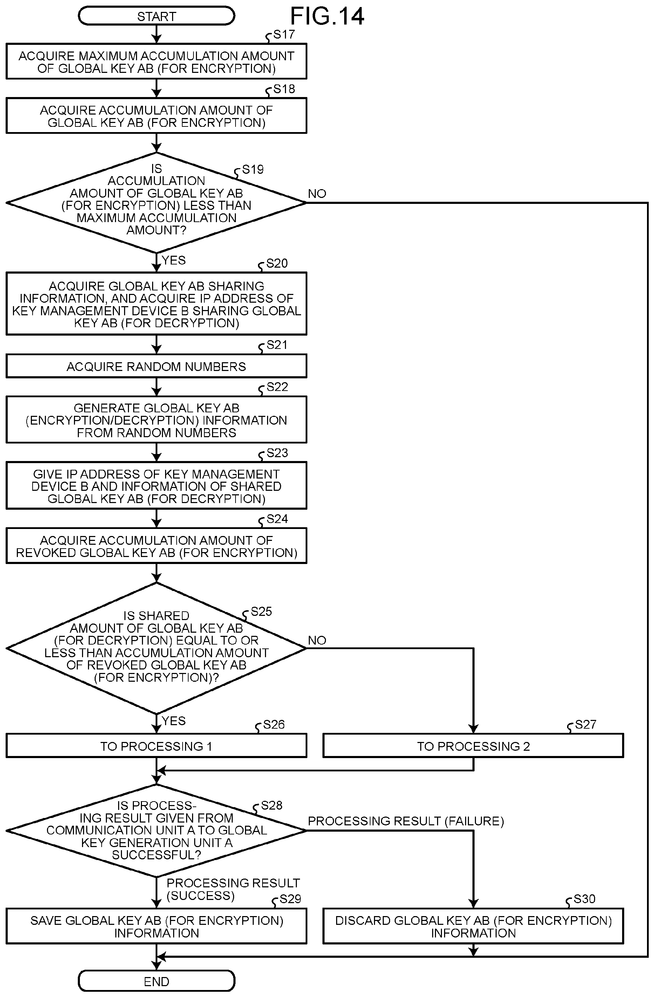

Fig. 14 is a flowchart illustrating an example of processing on a transmission side for global key sharing using a revoked global key according to the first arrangement. Fig. 14 illustrates an example of the processing on the key management device 1a side. The global key generation unit 16a of the key management device 1a periodically executes the processing of Fig. 14.

First, the global key generation unit 16a of the key management device 1a acquires the maximum accumulation amount of the global key AB (for encryption) from the global key sharing information saved in the storage unit 14a (step S17). Note that the data structure of the global key sharing information is as illustrated in Fig. 9 described above.

Then, the global key generation unit 16a acquires the accumulation amount (number of accumulated global keys × key size) of the global key AB (for encryption) 14a2 saved in the storage unit 14a (step S18).

Next, the global key generation unit 16a checks whether the accumulation amount of the global key AB (for encryption) 14a2 acquired at step S18 is less than the maximum accumulation amount of the global key AB (for encryption) acquired at step S17, and proceeds to step S20 when it is less than the maximum accumulation amount (Yes at step S19) while ending the processing when it is equal to or more than the maximum accumulation amount (No at step S19).

The global key generation unit 16a acquires the IP address of the key management device 1b that shares the global key AB (for decryption) from the global key sharing information saved in the storage unit 14a (step S20). Note that the data structure of the global key sharing information is as illustrated in Fig. 9 described above.

Then, the global key generation unit 16a acquires random numbers from the random number generation unit 15a (step S21).

The global key generation unit 16a then generates the global keys AB (encryption/decryption) information from the random numbers acquired at step S21 (step S22). Note that the data structures of the global keys (encryption/decryption) are as illustrated in Fig. 10 and Fig. 12 described above.

Next, the global key generation unit 16a gives the IP address of the key management device 1b (the key management device B) and the information of the shared global key AB (for decryption) 14b2 to the communication unit 17a (step S23).

Then, the communication unit 17a acquires, from the storage unit 14a, the accumulation amount (number of accumulated revoked global keys × key size) of the revoked global key AB (for encryption) whose revoked key flag is true (step S24).

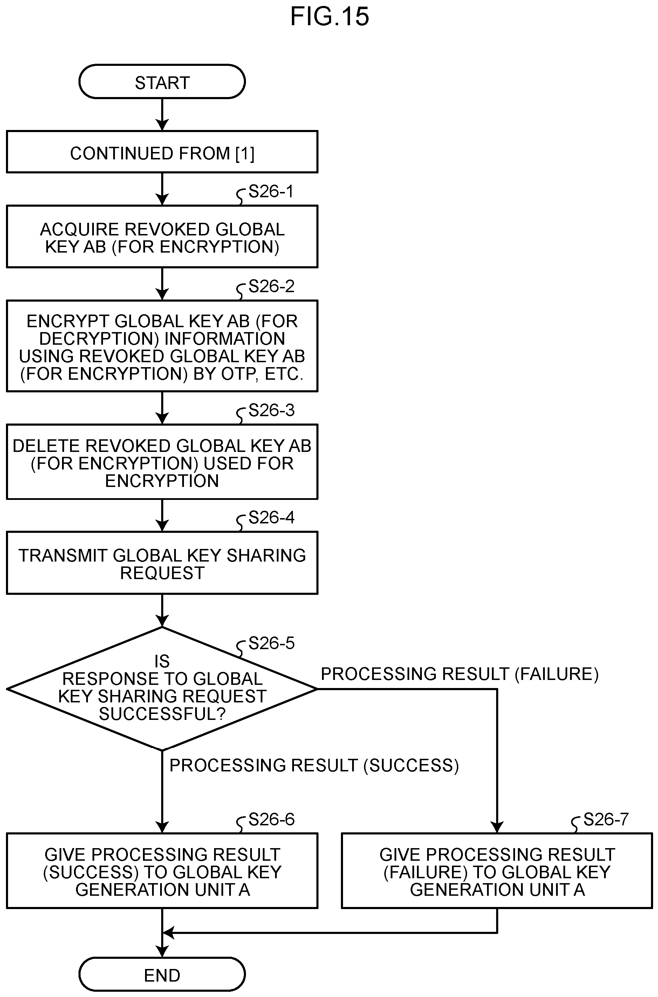

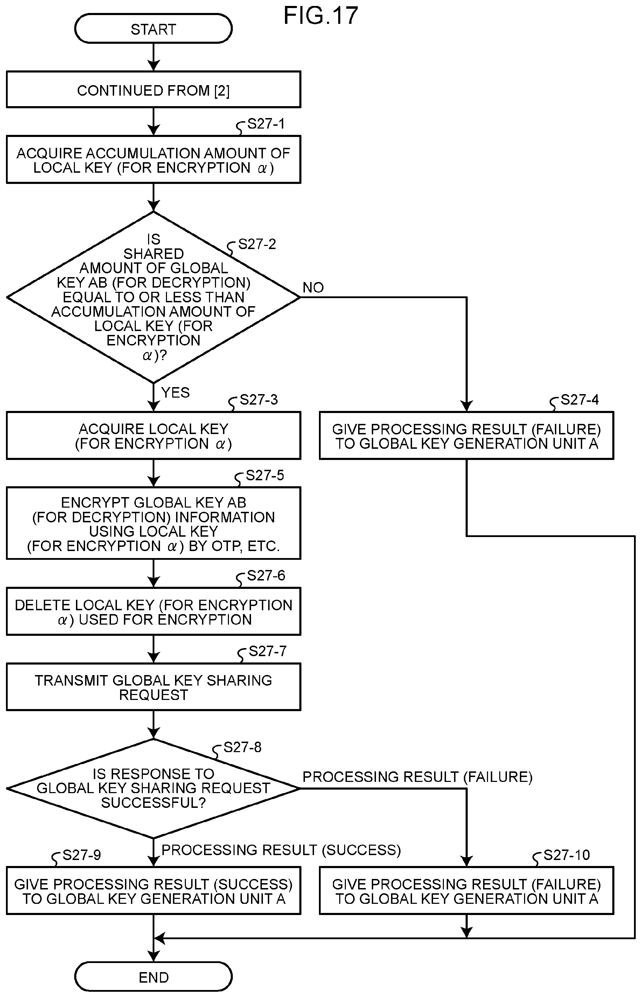

Next, at step S25, when the shared amount of the global key AB (for decryption) 14b2 (the accumulation amount of the global key AB (for encryption) 14a2 in the key management device 1a) is equal to or less than the accumulation amount of the revoked global key AB (for encryption) (Yes at step S25), the processing proceeds to the processing 1 (step S26). When the shared amount exceeds the accumulation amount (No at step S25), the processing proceeds to the processing 2 (step S27). The details of the processing 1 will be described later using Fig. 15, and the details of the processing 2 will be described later using Fig. 17.

After performing the processing at step S26 or S27, the communication unit 17a (hereinafter also referred to as a communication unit A) checks the processing result given to the global key generation unit 16a (hereinafter also referred to as a global key generation unit A) (step S28) and, when it is a processing result (success), saves the global key AB (for encryption) 14a2 information in the storage unit 14a (step S29). The revoked key flag in the data of the global key AB (for encryption) 14a2 is set to false.

On the other hand, in a case of a processing result (failure), the communication unit 17a discards the global key AB (for encryption) 14a2 information (step S30).

Fig. 15 is a flowchart illustrating an example of the processing 1 for global key sharing (transmission side) according to the first arrangement. Fig. 15 illustrates an example of the processing on the key management device 1a side.

The communication unit 17a acquires the revoked global key AB (for encryption) 14a3 from the storage unit 14a (step S26-1).

Next, the communication unit 17a encrypts the global key AB (for decryption) 14b2 information using the revoked global key AB (for encryption) 14a3 by OTP or the like (step S26-2).

Next, the communication unit 17a deletes the revoked global key AB (for encryption) 14a3 used for encryption from the storage unit 14a (step S26-3).

The communication unit 17a then transmits a global key sharing request to the key management device 1b (step S26-4).

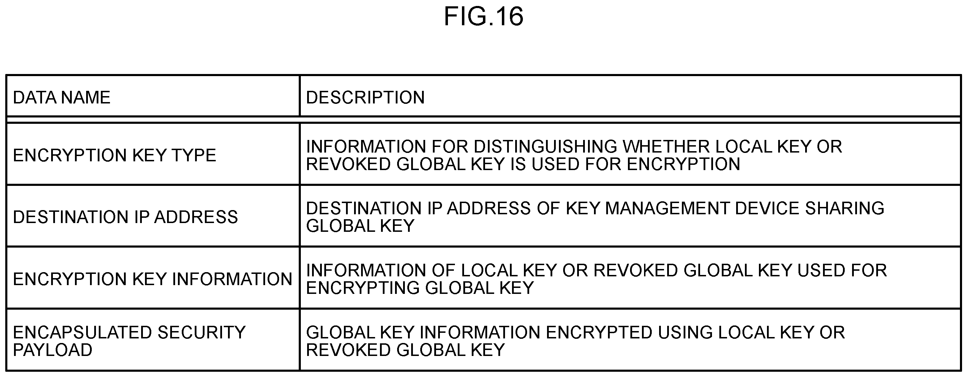

Fig. 16 is a diagram illustrating an example of the packet structure of the global key sharing request according to the first arrangement. The global key sharing request according to the first arrangement includes the encryption key type, destination IP address, encryption key information, and encapsulated security payload.

The encryption key type indicates the type of the encryption key used for encryption. The encryption key type is information to distinguish whether a local key or a revoked global key is used for encryption.

The destination IP address is the destination IP address of the key management devices 1 with which the global key is shared.

The encryption key information is information of the local key or revoked global key used to encrypt the global key. For example, the encryption key information includes the identification information of the local key when the local key is used to encrypt the global key. Furthermore, for example, when a revoked global key is used to encrypt the global key, identification information identifying the revoked global key is included (see Fig. 10 described above).

The encapsulated security payload is information of the global key encrypted using a local key or revoked global key.

Returning to Fig. 15, the global key sharing request at step S26-4 includes the followings.
Encryption key type: revoked global key
Destination IP address: IP address of the key management device 1b
Encryption key information: data of the revoked global key AB (for encryption) used to encrypt the global key AB (for decryption)
Encapsulated security payload: data of the encrypted global key AB (for decryption)

Next, the communication unit 17a checks the response to the global key sharing request from the key management device 1b (step S26-5). The communication unit 17a gives a processing result (success) to the global key generation unit 16a when the response is a processing result (success) (step S26-6), and gives a processing result (failure) to the global key generation unit 16a when the response is a processing result (failure) (step S26-7).

Fig. 17 is a flowchart illustrating an example of the processing 2 for global key sharing (transmission side) according to the first arrangement. Fig. 17 illustrates an example of the processing on the key management device 1a side.

The communication unit 17a acquires the accumulation amount of the local key (for encryption α) 14a1 from the storage unit 14a (step S27-1).

Then, the communication unit 17a checks whether the shared amount of the global key AB (for decryption) is equal to or less than the accumulation amount of the local key (for encryption α) 14a1 (step S27-2). When it is equal to or less than the accumulation amount (Yes at step S27-2), the communication unit 17a acquires the local key (for encryption α) 14a1 (step S27-3) and proceeds to step S27-5. On the other hand, when the shared amount of the global key AB (for decryption) exceeds the accumulation amount of the local key (for encryption α) 14a1 (No at step S27-2), the communication unit 17a gives a processing result (failure) to the global key generation unit 16a (step S27-4).

The communication unit 17a encrypts the the global key AB (for decryption) 14b2 information using the local key (for encryption α) 14a1 by OTP or the like (step S27-5).

Next, the communication unit 17a deletes the local key (for encryption α) 14a1 used for encryption from the storage unit 14a (step S27-6).

The communication unit 17a then transmits a global key sharing request to the key management device 1b (step S27-7). Note that the packet structure of the global key sharing request is as illustrated in Fig. 16 described above.

The global key sharing request at step S27-7 includes the followings.
Encryption key type: local key
Destination IP address: IP address of the key management device 1b
Encryption key information: data of the local key (for encryption α) used to encrypt the global key AB (for decryption)
Encapsulated security payload: data of the encrypted global key AB (for decryption)

Next, the communication unit 17a checks the response to the global key sharing request from the key management device 1b (step S27-8). The communication unit 17a gives a processing result (success) to the global key generation unit 16a when the response is a processing result (success) (step S27-9), and gives a processing result (failure) to the global key generation unit 16a when the response is a processing result (failure) (step S27-10).

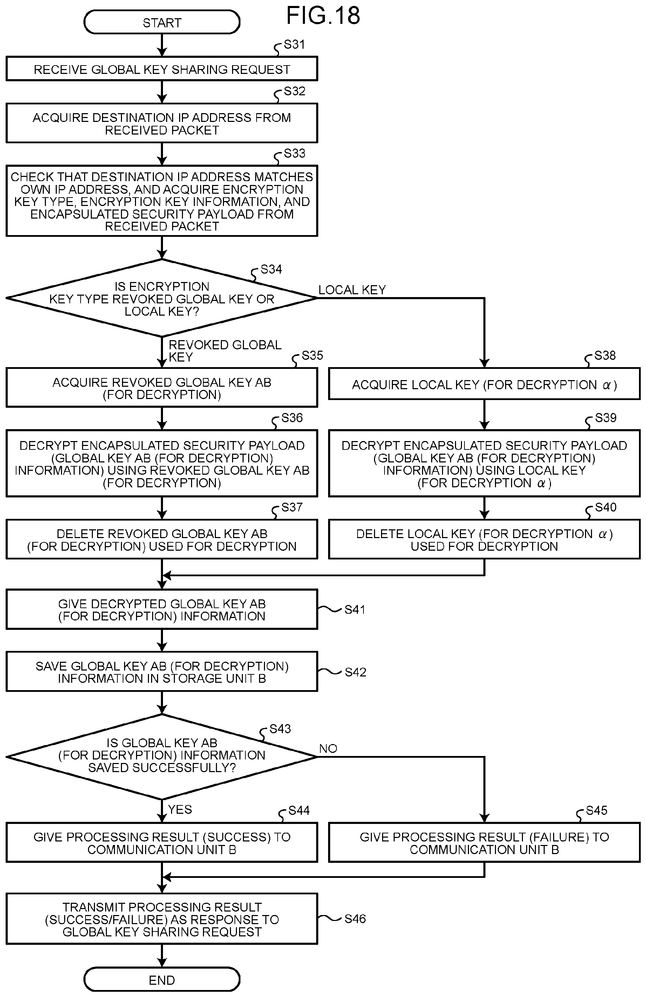

Fig. 18 is a flowchart illustrating an example of processing for global key sharing (reception side) according to the first arrangement. Fig. 18 illustrates an example of the processing on the key management device 1b side.

First, the communication unit 17b receives a global key sharing request from the key management device 1a (step S31).

Next, the communication unit 17b acquires the destination IP address from the packet received at step S31 (step S32).

Then, the communication unit 17b checks that the destination IP address acquired at step S32 matches the IP address of the key management device 1b, and acquires the encryption key type, encryption key information, and encapsulated security payload from the received packet (step S33).

Next, the communication unit 17b checks the encryption key type acquired as to whether the encryption key is a revoked global key or a local key at step S33 (step S34).

When the encryption key type is the revoked global key, the communication unit 17b acquires the revoked global key AB (for decryption) 14b3 from the storage unit 14b based on the encryption key information (step S35). The communication unit 17b decrypts the encapsulated security payload (the global key AB (for decryption) 14b2 information) using the revoked global key AB (for decryption) 14b3 acquired at step S35 (step S36). The communication unit 17b deletes the revoked global key AB (for decryption) 14b3 used for decryption from the storage unit 14b (step S37).

When the encryption key type is the local key, the communication unit 17b acquires the local key (for decryption α) 14b1 from the storage unit 14b based on the encryption key information (step S38). The communication unit 17b decrypts the encapsulated security payload (the global key AB (for decryption) 14b2 information) using the local key (for decryption α) 14b1 acquired at step S38 (step S39). The communication unit 17b deletes the local key (for decryption α) 14b1 used for decryption from the storage unit 14b (step S40).

Next, the communication unit 17b gives the d the decrypted global key AB (for decryption) 14b2 information to the global key generation unit 16b (step S41).

The global key generation unit 16b saves the data of the global key AB (for decryption) 14b2 in the storage unit 14b (hereinafter also referred to as a storage unit B) (step S42).

The global key generation unit 16b checks the result of saving the global key AB (for decryption) 14b2 information (step S43). The global key generation unit 16b gives a processing result (success) to the communication unit 17b (hereinafter also referred to as a communication unit B) in a case of success (step S44), and gives a processing result (failure) to the communication unit 17b in a case of failure (step S45).

The communication unit 17b transmits the processing result (success/failure) given from the global key generation unit 16b as a response to the global key sharing request to the key management device 1a (step S46).

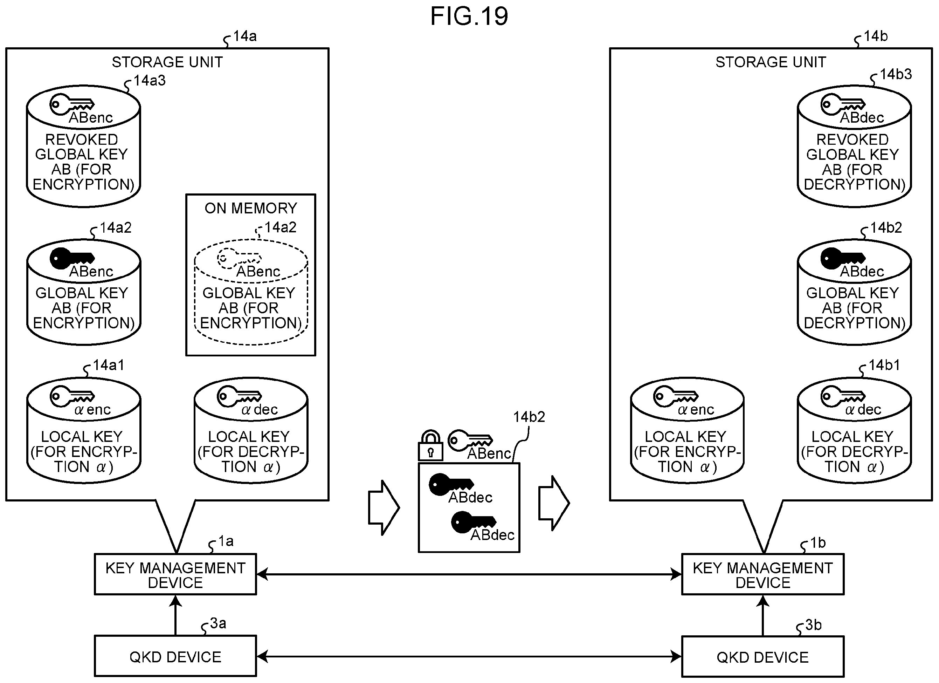

Fig. 19 is a diagram illustrating the global key sharing processing using a revoked global key according to the first arrangement. Fig. 19 illustrates the state of the key management devices 1a and 1b when the processing of steps S17 to S26 in Fig. 14 and steps S26-1 to S26-4 in Fig. 15 described above is performed.

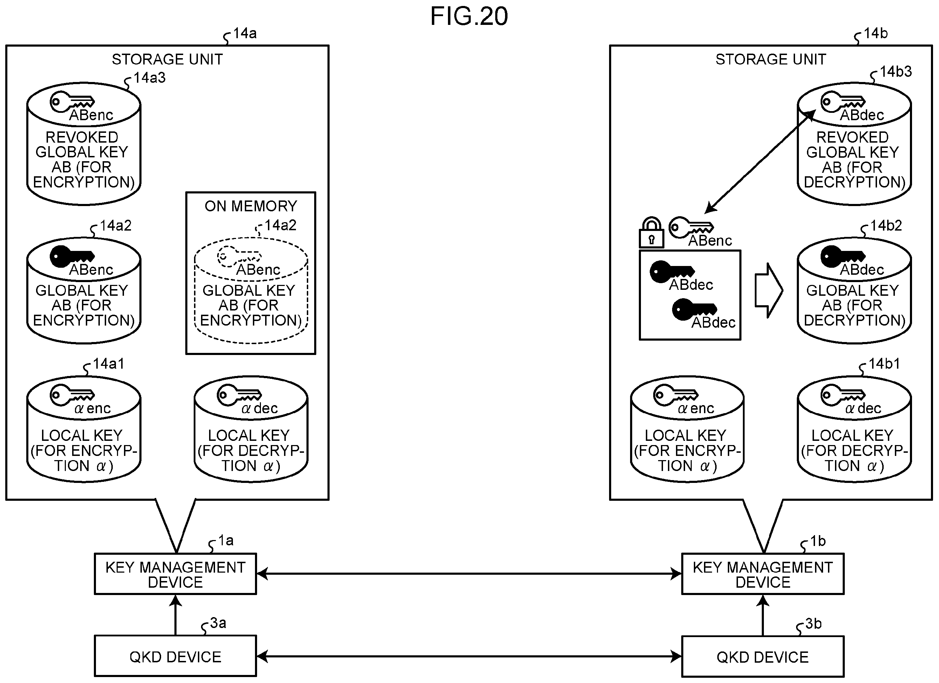

Fig. 20 is a diagram illustrating the global key sharing processing using a revoked global key according to the first arrangement. Fig. 20 illustrates the state of the key management devices 1a and 1b when the processing of steps S31 to S37 and steps S41 to S42 in Fig. 18 described above is performed.

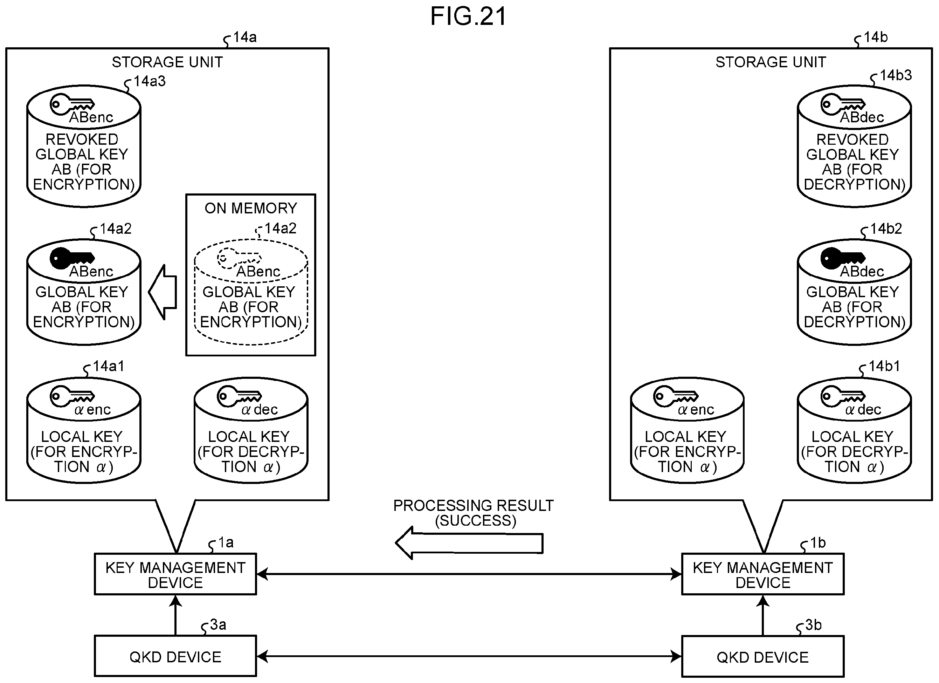

Fig. 21 is a diagram illustrating the global key sharing processing using a revoked global key according to the first arrangement. Fig. 21 illustrates the state of the key management devices 1a and 1b when the processing of steps S43 to S44 and S46 in Fig. 18, steps S26-5 to S26-6 in Fig. 15, and steps S28 to S29 in Fig. 14 described above is performed.

As described above, in the key management device 1a of the first arrangement, the global key generation unit 16a generates a first global key used for encryption or decryption of communication of the application 2a and stores, in the storage unit 14a, the first global key shared with the key management device 1b by encrypted transfer using QKD. The management unit 13a checks the expiration date of the first global key stored in the storage unit 14a, and updates the first global key that is expired to a revoked global key. When sharing a second global key newly generated by the global key generation unit 16a with the key management device 1b, the communication unit 17a encrypts the second global key using the revoked global key and transmits the encrypted second global key to the key management device 1b. The supply unit 11a supplies the second global key to the application 2a.

Thereby, it is possible with the first arrangement to make more effective use of the encryption key (the global key in the present arrangement) shared using QKD. Even though the global keys transferred and shared over the QKD network with limited transmission capacity are the valuable resource, they are conventionally discarded after the expiration date. As described in the first arrangement, in order to make effective use of the revoked global keys after the elapse of a certain period of time, it is possible to save the consumption of local keys by using, instead of the local keys, the revoked global keys as the encryption/decryption keys when sharing new global keys.

While OTP is used in the first arrangement for encryption at the time of global key sharing, other encryption methods may also be used. For example, advanced encryption standard (AES) may be used for encryption at the time of global key sharing. In other words, the communication unit 17a may encrypt the second global key by AES using the revoked global key.

### Second Arrangement

Next, a second arrangement will be described. In the description of the second arrangement, explanations similar to those of the first arrangement will be omitted and the portions different from those of the first arrangement will be described. The second arrangement describes a method of performing global key sharing with a key management device at a destination site via an adjacent key management device in a configuration of a quantum cryptography communication system that further includes a relay key management device.

### Example of Configuration

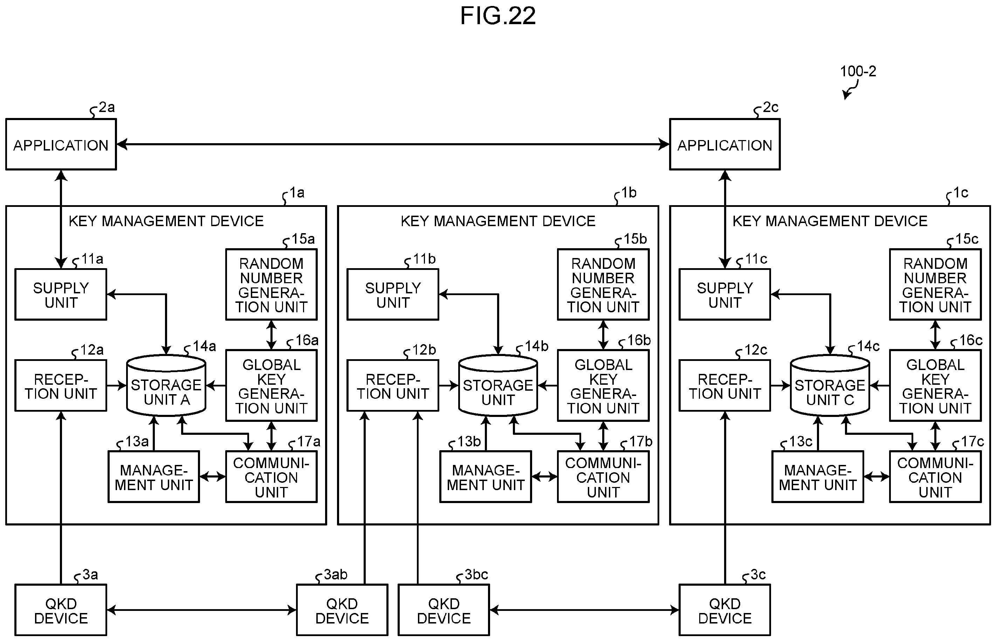

Fig. 22 is a diagram illustrating an example of a configuration of a quantum cryptography communication system 100-2 according to the second arrangement. The quantum cryptography communication system 100-2 according to the second arrangement includes key management devices 1a to 1c, applications 2a and 2c, and QKD devices 3a, 3ab, 3bc, and 3c. As in the first arrangement (Fig. 1), an application 2b may be connected to the key management device 1b as well.

The global key shared by key management devices 1a and 1c is used, for example, to encrypt communication in the application 2a and to decrypt the encrypted communication in the application 2c. The global keys (encryption key/decryption key) shared between the key management devices 1a and 1c are saved in the storage units 14a and 14c (storage units A and C), respectively.

The application 2a acquires the global key (for encryption) from the supply unit 11a of the key management device 1a. The application 2a encrypts the application data using the global key (for encryption) with OTP or the like, and transmits it to the application 2c. The application 2c accesses a supply unit 11c of the key management device 1c to acquire a global key (for decryption) based on the encryption key information such as a key ID transmitted along with the encrypted data. The application 2c decrypts the encrypted application data using the global key (for decryption).

The key management device 1a, the application 2a, and the QKD device 3a operate at a site A, for example. In the following description, information, devices, and functional blocks related to the site A may be indicated with a symbol A. Similarly, the key management device 1b and the QKD device 3b operate at a site B, for example. In the following description, information, devices, and functional blocks related to the site B may be indicated with a symbol B. Similarly, the key management device 1c, the application 2c, and the QKD device 3c operate at a site C, for example. In the following description, information, devices, and functional blocks related to the site C may be indicated with a symbol C.

For example, in a case where the key management device 1a and QKD device 3a and the key management device 1c and QKD device 3c are physically distant from each other and cannot share local keys (encryption/decryption), the key management devices 1a and 1c cannot directly communicate and perform global key sharing since there is no local keys (encryption/decryption) required for cryptography communication between the key management devices 1a and 1c.

As a solution, the key management device 1b and the QKD devices 3ab, 3bc are placed as illustrated in Fig. 22. Local keys (encryption/decryption) are shared between the QKD devices 3a and 3ab, and between the QKD devices 3bc and 3c. This makes it possible to perform global key sharing via the key management device 1b, even though the key management devices 1a and 1c cannot communicate directly to perform global key sharing.

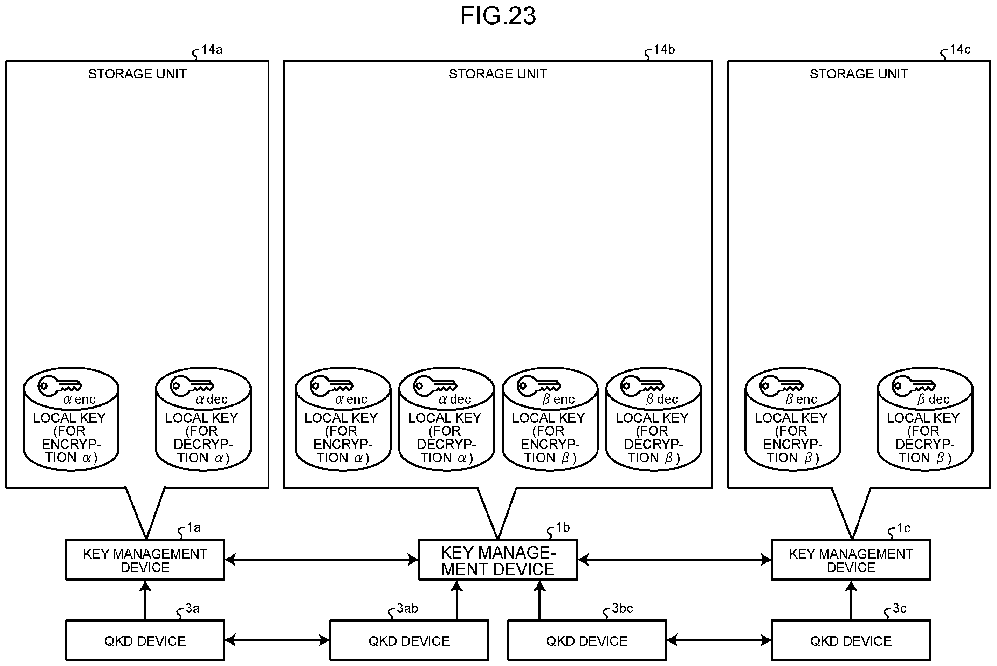

Fig. 23 is a diagram illustrating the state of the key management devices 1a to 1c with shared local keys according to the second arrangement. The key management device 1b relays the local keys. The local keys shared by the QKD devices 3a and 3ab are distinguished to be used for encryption α and for decryption α and saved in the storage unit 14a of the key management device 1a and the storage unit 14b of the key management device 1b. Similarly, the local keys shared by the QKD devices 3bc and 3c are distinguished to be used for encryption β and for decryption β and saved in the storage unit 14b of the key management device 1b and the storage unit 14c of the key management device 1c.

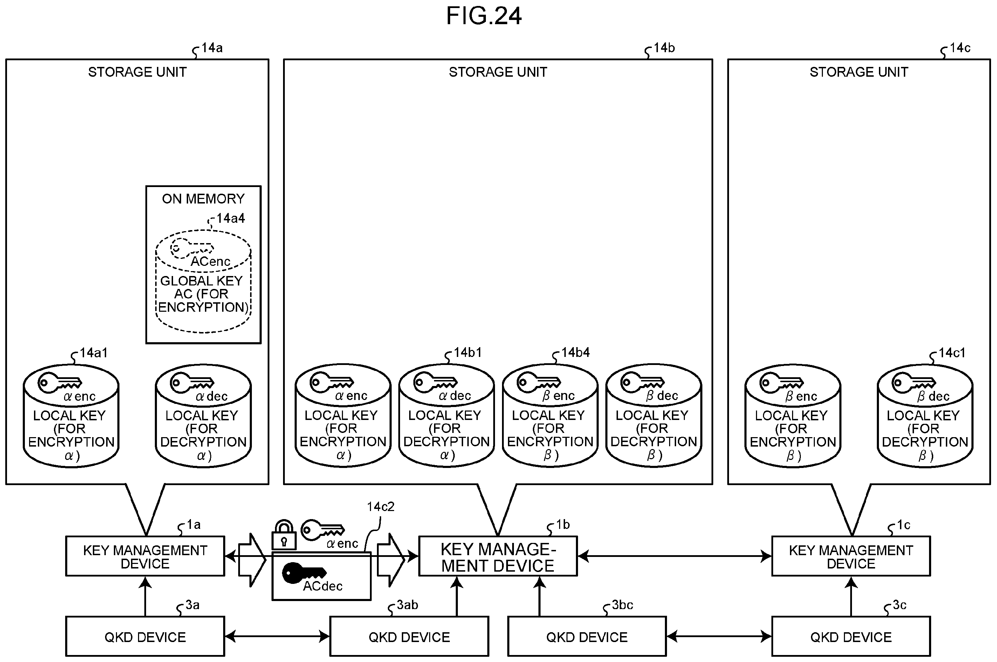

Fig. 24 is a diagram for describing an example of global key sharing processing according to the second arrangement. When performing global key sharing with the key management device 1c, the key management device 1a creates a global key AC (for encryption) 14a4 on the memory (main storage device) of the key management device 1a. Next, the communication unit 17a encrypts the global key AC (for encryption) 14a4 using the local key (for encryption α) 14a1 by OTP or the like as a global key AC (for decryption) 14c2 in the key management device 1c. The communication unit 17a transmits the encrypted global key AC (for decryption) 14c2 and the encryption key information used for encryption to the key management device 1c.

However, the key management device 1a cannot communicate directly with the key management device 1c, so it goes (relays) through the key management device 1b.

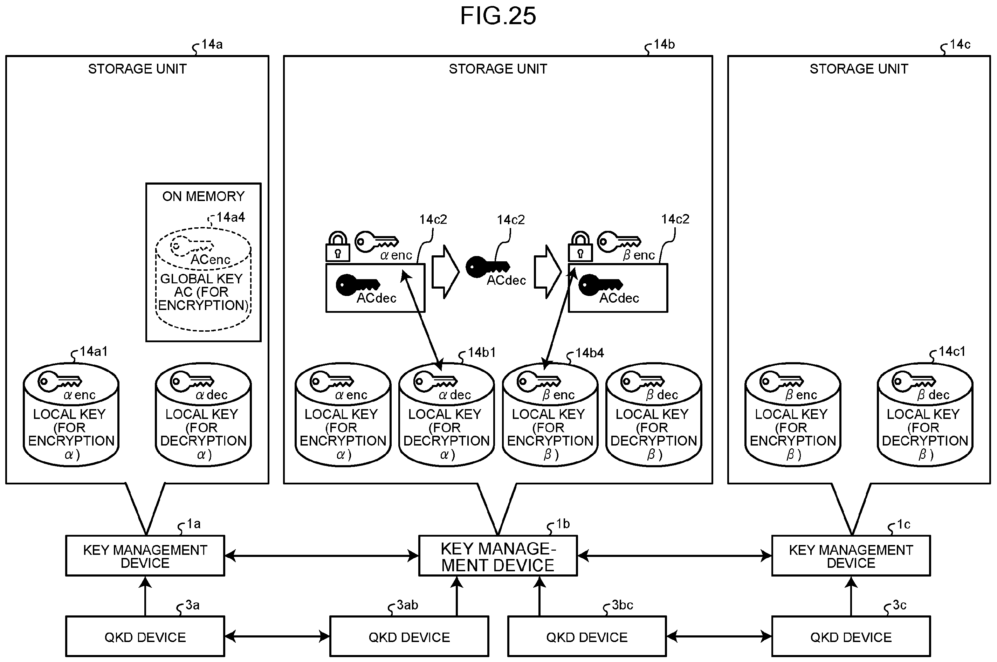

Fig. 25 is a diagram for describing an example of global key sharing processing according to the second arrangement. Next, the communication unit 17b of the key management device 1b decrypts the global key AC (for decryption) 14c2 using the local key (for decryption α) 14b1 based on the encryption key information received from the key management device 1a. Then, the communication unit 17b encrypts the global key AC (for decryption) 14c2 using a local key (for encryption β) 14b4 by OTP or the like.

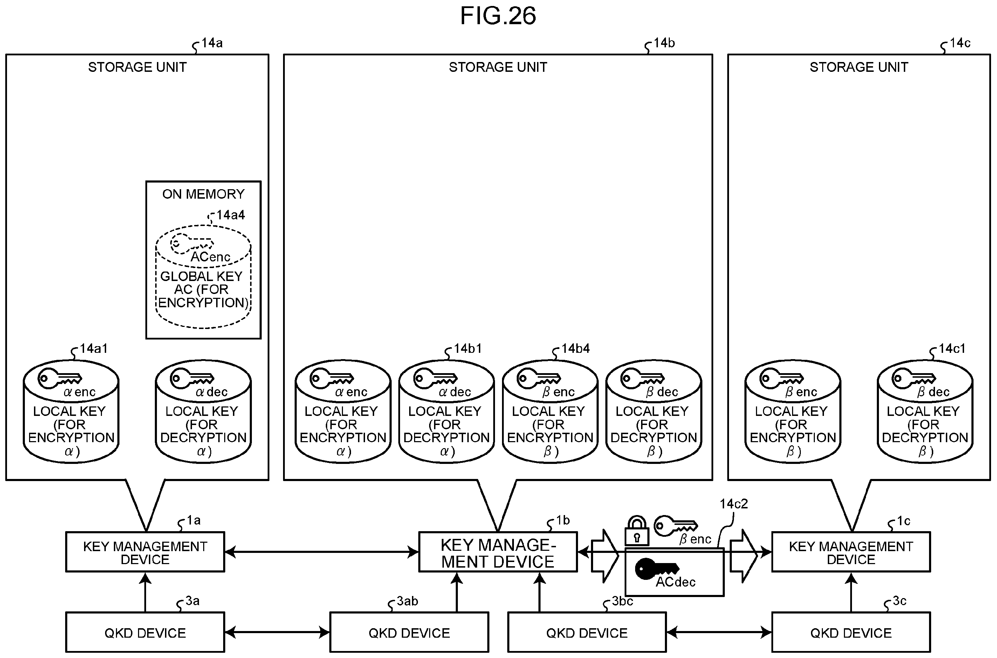

Fig. 26 is a diagram for describing an example of global key sharing processing according to the second arrangement. Next, the communication unit 17b of the key management device B1b transmits the encrypted global key AC (for decryption) 14c2 and the encryption key information used for encryption to the key management device C1c.

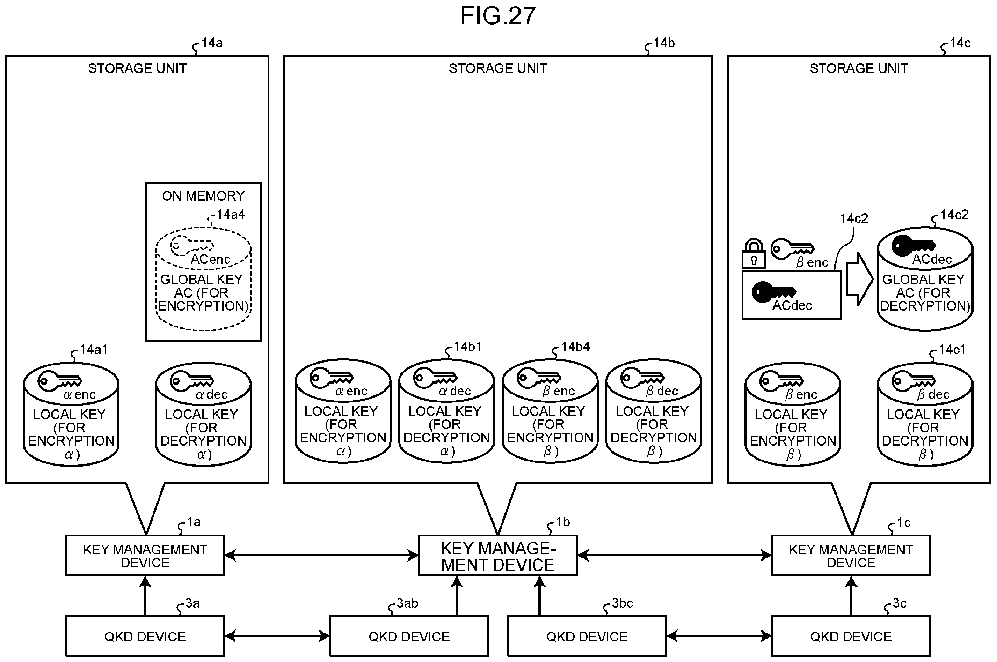

Fig. 27 is a diagram for describing an example of global key sharing processing according to the second arrangement. Then, a communication unit 17c of the key management device 1c decrypts the global key AC (for decryption) 14c2 using a local key (for decryption β) 14c1 based on the encryption key information received from the key management device 1b. The communication unit 17c saves the decrypted global key AC (for decryption) 14c2 in the storage unit 14c.

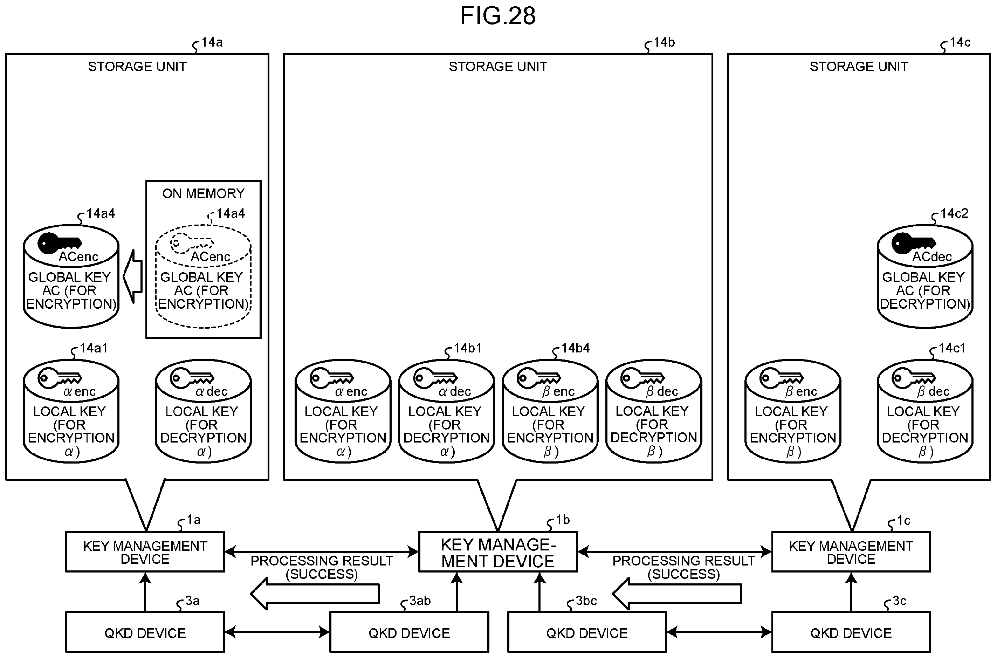

Fig. 28 is a diagram for describing an example of global key sharing processing according to the second arrangement. Next, the communication unit 17c of the key management device 1c transmits the fact that the saving processing of the global key AC (for decryption) 14c2 is successful to the key management device 1a via the key management device 1b. Upon receiving the processing result (success) from the key management device 1c, the key management device 1a saves the global key AC (for encryption) 14a4 stored on the memory in the database (auxiliary storage device such as HDD) of the storage unit 14a.

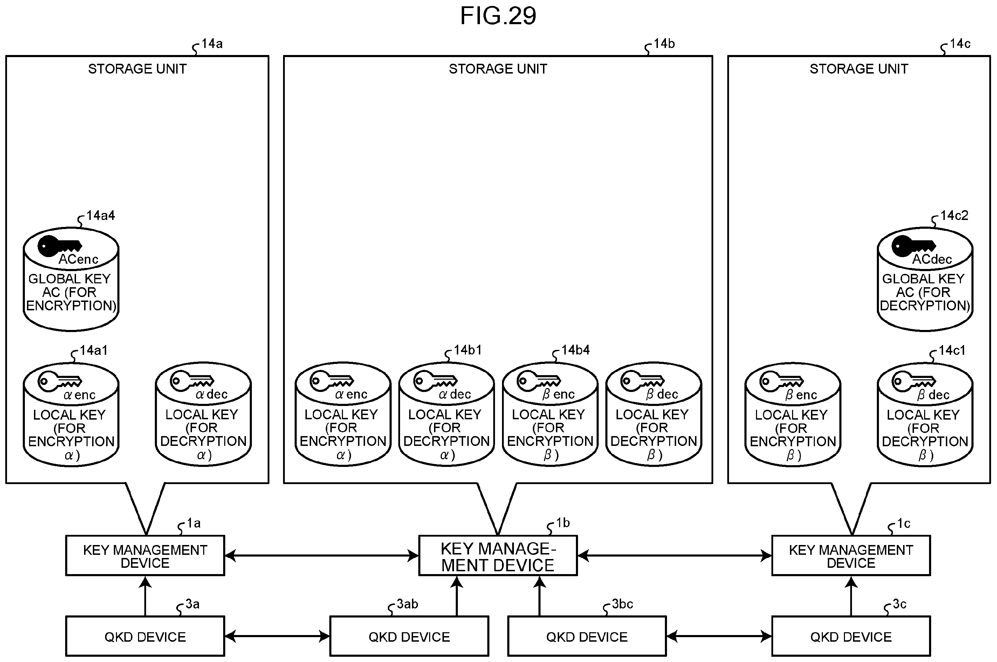

Fig. 29 is a diagram for describing an example of global key sharing processing according to the second arrangement. Fig. 29 illustrates the state when the global key AC (for encryption) 14a4 and the global key AC (for decryption) 14c2 are shared between the key management device 1a and the key management device 1c.

As illustrated in Fig. 24 to Fig. 29, when local keys are used for global key-sharing cryptography communication, it is always necessary to relay through the adjacent key management device 1b to the key management device 1c at the destination site.

However, with the global key sharing scheme using a revoked global key, it is not necessary to go through the adjacent key management device 1b, and may communicate directly with the key management device 1c at the destination site C.

First, for the global key sharing scheme using a revoked global key, a method of performing global key sharing with a key management device at a destination site via an adjacent key management device will be described as the second arrangement. Note that a method of performing global key sharing directly with a key management device at a destination site will be described in a third arrangement later.

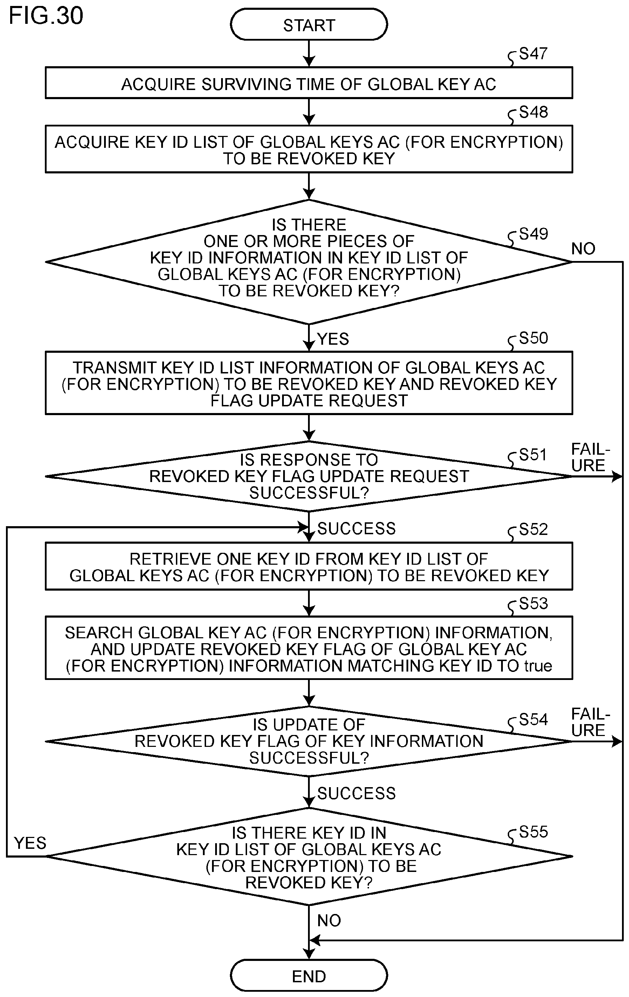

Fig. 30 is a flowchart illustrating an example of processing on a transmission side for updating a global key to a revoked global key with relay according to the second arrangement. Fig. 30 illustrates an example of the processing on the key management device 1a side. The management unit 13a of the key management device 1a periodically executes the processing of Fig. 30.

First, the management unit 13a of the key management device 1a acquires the surviving time of the global key AC from the global key sharing information saved in the storage unit 14a (step S47). Note that the data structure of the global key sharing information is as illustrated in Fig. 9 described above.

Next, the management unit 13a acquires a list of key IDs of global keys that correspond to the revoked key (key generation date/time < current date/time - surviving time) from the database of the global key AC (for encryption) 14a4 saved in the storage unit 14a (step S48).

The management unit 13a proceeds to step S50 when there is one or more pieces of key ID information in the list of key IDs of the global keys AC (for encryption) to be the revoked key acquired at step S48 (Yes at step S49), and ends the processing if there is no pieces of the key ID information (No at step S49).

The management unit 13a transmits the key ID list information of the global keys AC (for encryption) to be the revoked key and a revoked key flag update request to the key management device 1c via the communication unit 17a (step S50). Since the key management devices 1a and 1c cannot communicate directly, the key ID list information of the global keys AC (for encryption) to be the revoked key and a revoked key flag update request are transmitted via (relayed through) the key management device 1b.

Then, the management unit 13a checks whether a response to the revoked key flag update request is received from the key management device 1c via the communication unit 17a (step S51). Since the key management devices 1a and 1c cannot communicate directly, the response is received via the key management device 1b.

The management unit 13a proceeds to step S52 when the response received at step S51 indicates success, and ends the processing when indicating failure.

The management unit 13a retrieves one piece of key ID information from the key ID list of the global keys AC (for encryption) to be the revoked key (step S52).

Next, the management unit 13a searches the the global key AC (for encryption) 14a4 information saved in the storage unit 14a, and updates the revoked key flag of the global key AC information matching the key ID acquired at step S52 to true (step S53). Note that the data structure of the global key (for encryption) is as illustrated in Fig. 10 described above.

At step S54, the management unit 13a proceeds to step S55 when update of the revoked key flag is successful, and ends the processing when unsuccessful.

The management unit 13a repeats the processing of steps S52 to S54 until there is no more key ID information in the key ID list of the global keys AC (for encryption) to be the revoked key (Yes at step S55), and ends the processing when there is no more key ID information (No at step S55).

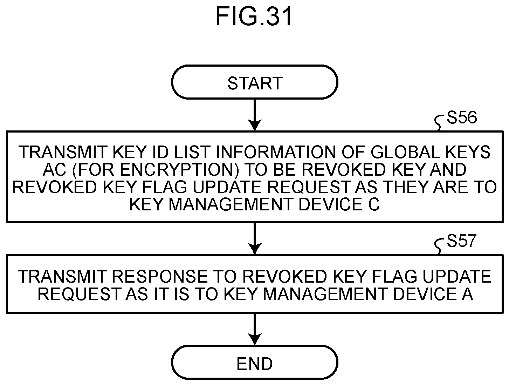

Fig. 31 is a flowchart illustrating an example of processing on a relay side for updating a global key to a revoked global key with relay according to the second arrangement. Fig. 31 illustrates an example of the processing on the key management device 1b side.

The communication unit 17b of the key management device 1b transmits the key ID list information of the global keys AC (for encryption) to be the revoked key and the revoked key flag update request received from the key management device 1a to the key management device 1c (the key management device C) as they are (step S56).

The communication unit 17b of the key management device 1b transmits a response to the revoked key flag update request received from the key management device 1c to the key management device 1a (the key management device A) as it is (step S57).

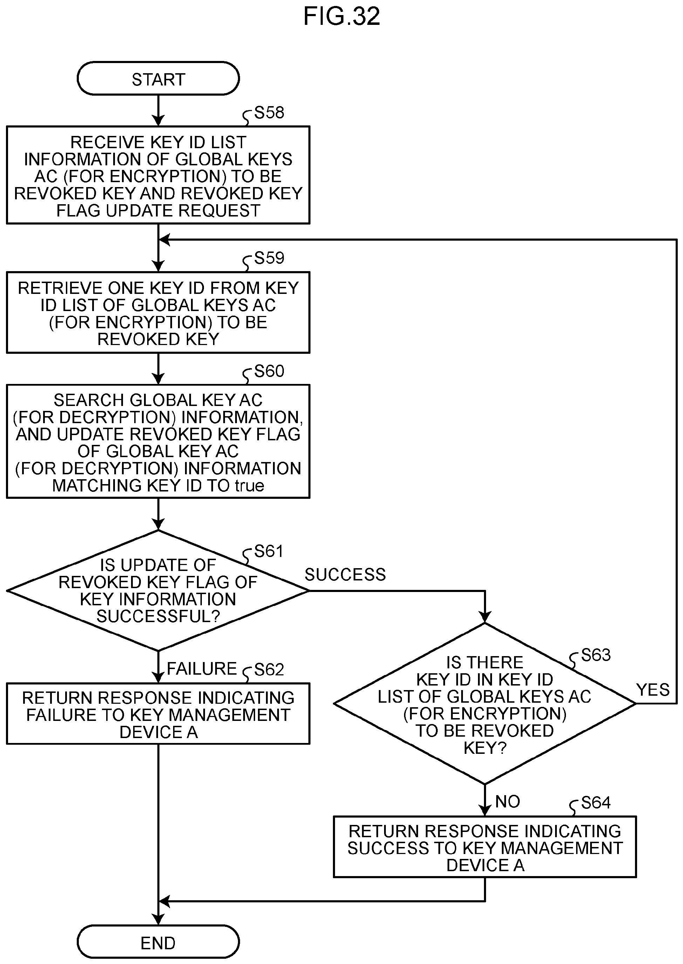

Fig. 32 is a flowchart illustrating an example of processing on a reception side for updating a global key to a revoked global key with relay according to the second arrangement. Fig. 32 illustrates an example of the processing on the key management device 1c side.

First, a management unit 13c of the key management device 1c receives the key ID list information of the global keys AC (for encryption) to be the revoked key and a revoked key flag update request from the key management device 1b via the communication unit 17c (step S58).

Next, the management unit 13c retrieves one piece of key ID information from the key ID list of the global keys AC (for encryption) to be the revoked key (step S59).

Next, the management unit 13c searches the global key AC (for decryption) 14c2 information saved in the storage unit 14c, and updates the revoked key flag of the key information that matches the key ID acquired at step S59 to true (step S60). Note that the data structure of the global key (for decryption) is as illustrated in Fig. 12 described above.

At step S61, cheking is performed for whether update of the revoked key flag is successful, and the management unit 13c proceeds to step S63 when update of the revoked key flag is successful, while returning a response indicating failure to the key management device 1a (the key management device A) via the communication unit 17c and ending the processing when update of the revoked key flag is unsuccessful (step S62). Since the key management devices 1c and 1a cannot communicate directly, the response is transmitted via the key management device 1b.

The management unit 13c repeats the processing of steps S59 to S61 until there is no more key ID information in the key ID list of the global keys AC (for encryption) to be the revoked key (Yes at step S63), and proceeds to step S64 when there is no more key ID information (No at step S63).

The management unit 13c returns a response indicating success to the key management device 1a via the communication unit 17c, and ends the processing (step S64). Since the key management devices 1c and 1a cannot communicate directly, the response is transmitted via the key management device 1b.

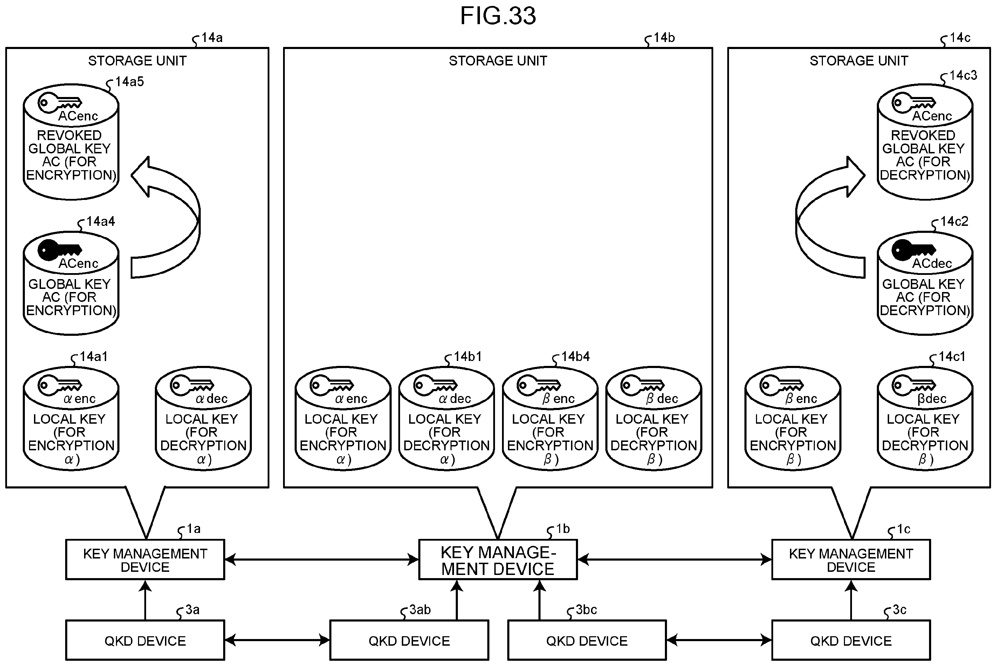

Fig. 33 is a diagram illustrating the state of the key management devices 1a and 1c according to the second arrangement, after performing the processing for updating the global key to the revoked global key with relay. In the second arrangement, the revoked global key AC (for encryption) 14a5 and the revoked global key AC (for decryption) 14c3 are used for implementing new global key sharing.

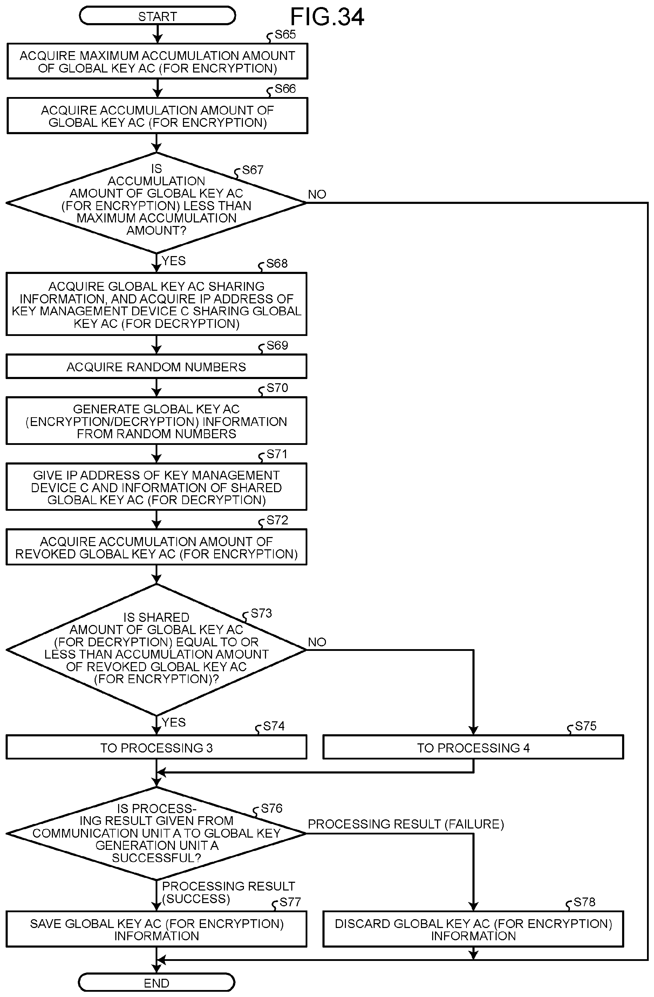

Fig. 34 is a flowchart illustrating an example of processing on a transmission side for global key sharing (with relay) using a revoked global key according to the second arrangement. Fig. 34 illustrates an example of the processing on the key management device 1a side. The global key generation unit 16a of the key management device 1a periodically executes the processing of Fig. 34.

First, the global key generation unit 16a of the key management device 1a acquires the maximum accumulation amount of the global key AC (for encryption) 14a4 from the global key sharing information saved in the storage unit 14a (step S65). Note that the data structure of the global key sharing information is as illustrated in Fig. 9 described above.

Then, the global key generation unit 16a acquires the accumulation amount (number of accumulated global keys × key size) of the global key AC (for encryption) 14a4 saved in the storage unit 14a (step S66).

Next, the global key generation unit 16a checks whether the accumulation amount of the global key AC (for encryption) 14a4 acquired at step S66 is less than the maximum accumulation amount of the global key AC (for encryption) 14a4 acquired at step S65, and proceeds to step S68 when it is less than the maximum accumulation amount (Yes at step S67) while ending the processing when it is equal to or more than the maximum accumulation amount (No at step S67).

The global key generation unit 16a acquires the IP address of the key management device 1c (the key management device C) that shares the global key AC (for decryption) from the global key sharing information saved in the storage unit 14a (step S68). Note that the data structure of the global key sharing information is as illustrated in Fig. 9 described above.

Then, the global key generation unit 16a acquires random numbers from the random number generation unit 15a (step S69).

The global key generation unit 16a then generates the global keys AC (encryption/decryption) information from the random numbers acquired at step S69 (step S70). Note that the data structures of the global keys (encryption/decryption) are as illustrated in Fig. 10 and Fig. 12 described above.

Next, the global key generation unit 16a gives the IP address of the key management device 1c (the key management device C) and the shared global key AC (for decryption) 14c2 to the communication unit 17a (step S71).

Then, the communication unit 17a acquires, from the storage unit 14a, the accumulation amount (number of accumulated revoked global keys × key size) of the revoked global key AC (for encryption) whose revoked key flag is true (step S72).

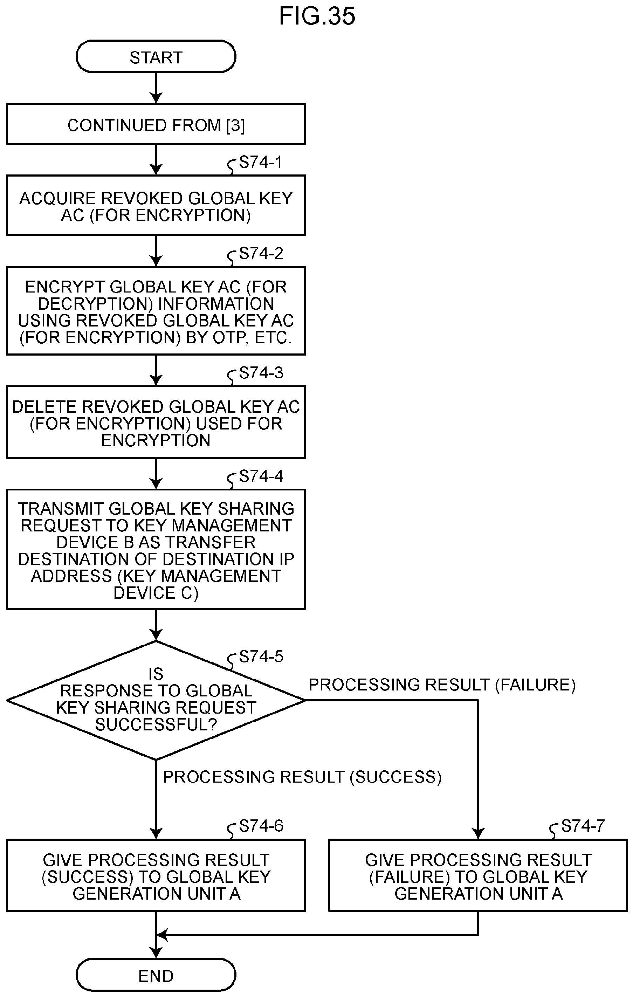

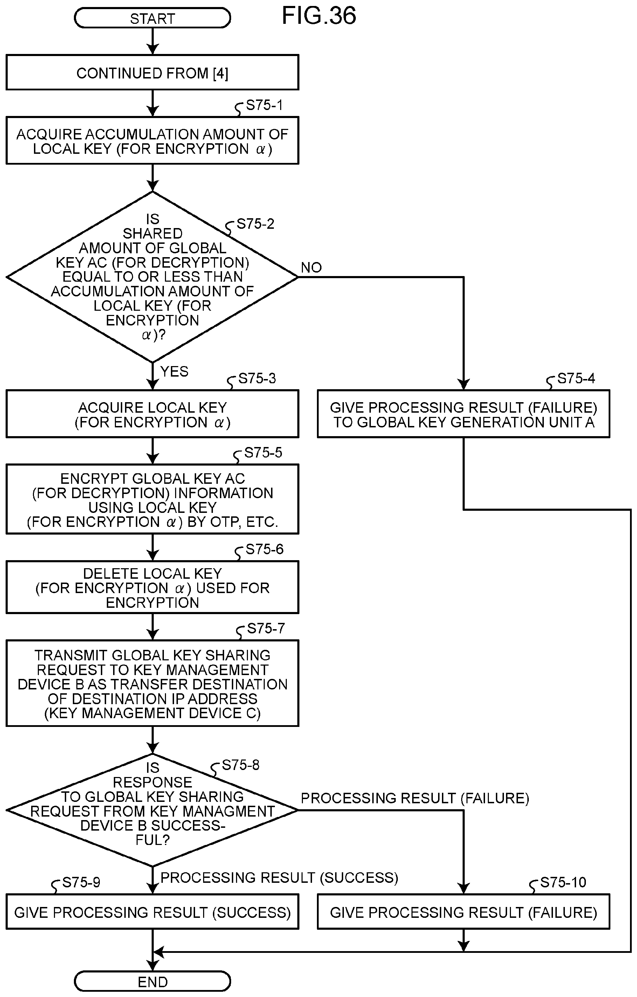

Next, at step S73, when the shared amount of the global key AC (for decryption) 14c2 (the accumulation amount of the global key AC (for encryption) 14a4 in the key management device 1a) is equal to or less than the accumulation amount of the revoked global key AC (for encryption) (Yes at step S73), the processing proceeds to the processing 3 (step S74). When the shared amount exceeds the accumulation amount (No at step S73), the processing proceeds to the processing 4 (step S75). The details of the processing 3 will be described later using Fig. 35, and the details of the processing 4 will be described later using Fig. 36.

After performing the processing at step S74 or S75, the communication unit 17a checks the processing result given to the global key generation unit 16a (step S76) and, when it is a processing result (success), saves the global key AC (for encryption) 14a4 information in the storage unit 14a (step S77). The revoked key flag in the global key AC (for encryption) 14a4 information is set to false.

On the other hand, in a case of a processing result (failure), the communication unit 17a discards the global key AC (for encryption) 14a4 information (step S78).

Fig. 35 is a flowchart illustrating an example of the processing 3 on a transmission side for global key sharing (with relay) according to the second arrangement. Fig. 35 illustrates an example of the processing on the key management device 1a side.

The communication unit 17a acquires the revoked global key AC (for encryption) 14a5 from the storage unit 14a (step S74-1).

Next, the communication unit 17a encrypts the global key AC (for decryption) 14c2 information using the revoked global key AC (for encryption) 14a5 by OTP or the like (step S74-2).

Next, the communication unit 17a deletes the revoked global key AC (for encryption) 14a5 used for encryption from the storage unit 14a (step S74-3).

The communication unit 17a then transmits a global key sharing request to the key management device 1b (the key management device B) that is the transfer destination of the destination IP address of the key management device 1c (the key management device C) based on route information (step S74-4). Note that the packet structure of the global key sharing request is as illustrated in Fig. 16 described above.

The global key sharing request at step S74-4 includes the followings.
Encryption key type: revoked global key
Destination IP address: IP address of the key management device 1c
Encryption key information: data of the revoked global key AC (for encryption) used to encrypt the global key AC (for decryption)
Encapsulated security payload: data of the encrypted global key AC (for decryption)

Next, the communication unit 17a checks the response to the global key sharing request from the key management device 1b (step S74-5). The communication unit 17a gives a processing result (success) to the global key generation unit 16a when the response is a processing result (success) (step S74-6), and gives a processing result (failure) to the global key generation unit 16a when the response is a processing result (failure) (step S74-7).

Fig. 36 is a flowchart illustrating an example of the processing 4 on a transmission side for global key sharing (with relay) according to the second arrangement. Fig. 36 illustrates an example of the processing on the key management device 1a side.

The communication unit 17a acquires the accumulation amount of the local key (for encryption α) 14a1 from the storage unit 14a (step S75-1).

Then, the communication unit 17a checks whether the shared amount of the global key AC (for decryption) is equal to or less than the accumulation amount of the local key (for encryption α) 14a1 (step S75-2). When it is equal to or less than the accumulation amount (Yes at step S75-2), the communication unit 17a acquires the local key (for encryption α) 14a1 (step S75-3) and proceeds to step S75-5. On the other hand, when the shared amount of the global key AC (for decryption) exceeds the accumulation amount of the local key (for encryption α) 14a1 (No at step S75-2), the communication unit 17a gives a processing result (failure) to the global key generation unit 16a (step S75-4).

The communication unit 17a encrypts the global key AC (for decryption) 14c2 information using the local key (for encryption α) 14a1 by OTP or the like (step S75-5).

Next, the communication unit 17a deletes the local key (for encryption α) 14a1 used for encryption from the storage unit 14a (step S75-6).

The communication unit 17a then transmits a global key sharing request to the key management device 1b (the key management device B) that is the transfer destination of the destination IP address of the key management device 1c (the key management device C) based on the route information (step S75-7). Note that the packet structure of the global key sharing request is as illustrated in Fig. 16 described above.

The global key sharing request at step S75-7 includes the followings.
Encryption key type: local key
Destination IP address: IP address of the key management device 1c
Encryption key information: data of the local key (for encryption α) used to encrypt the global key AC (for decryption)
Encapsulated security payload: data of the encrypted global key AC (for decryption)

Next, the communication unit 17a checks whether the processing result of the response to the global key sharing request from the key management device 1b (the key management device B) is successful (step S75-8). The communication unit 17a gives a processing result (success) to the global key generation unit 16a when the response is the processing result (success) (step S75-9), and gives a processing result (failure) to the global key generation unit 16a when the response is a processing result (failure) (step S75-10).

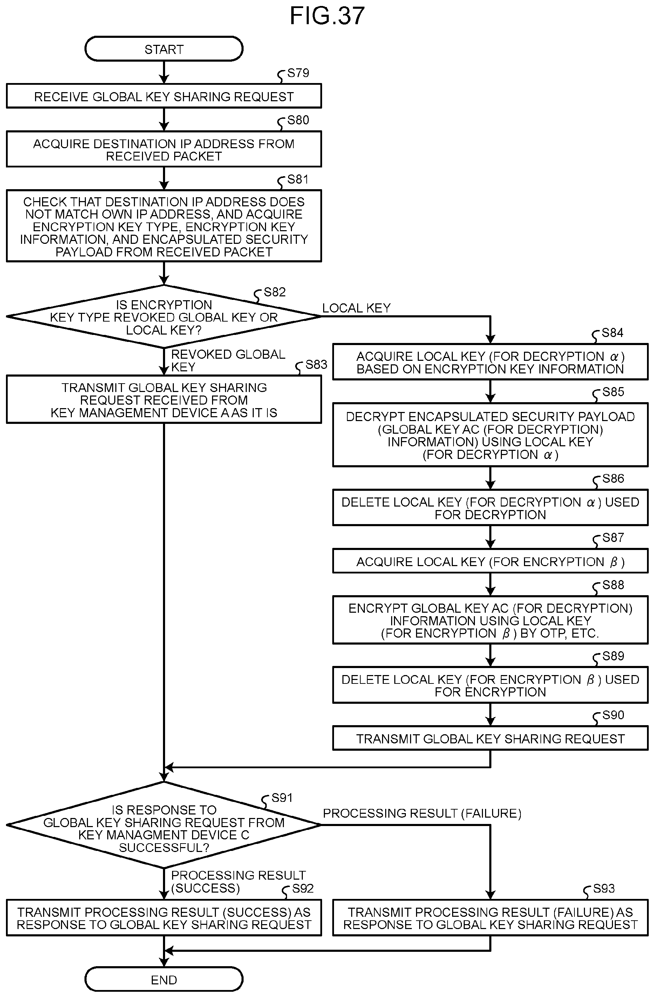

Fig. 37 is a flowchart illustrating an example of processing on a relay side for global key sharing (with relay) according to the second arrangement. Fig. 37 illustrates an example of the processing on the key management device 1b side.

First, the communication unit 17b receives a global key sharing request from the key management device 1a (step S79).

Next, the communication unit 17b acquires the destination IP address from the packet received at step S79 (step S80).

Then, the communication unit 17b checks that the destination IP address acquired at step S80 does not match the IP address of the key management device 1b, and acquires the encryption key type, encryption key information, and encapsulated security payload from the received packet (step S81).

Next, the communication unit 17b checks the encryption key type acquired at step S81 (step S82).

When the encryption key type is the revoked global key, the communication unit 17b transmits the global key sharing request received from the key management device 1a to the key management device 1c as it is (step S83). Note that the packet structure of the global key sharing request is as illustrated in Fig. 16 described above.

When the encryption key type is the local key, the communication unit 17b acquires the local key (for decryption α) 14b1 from the storage unit 14b based on the encryption key information (step S84). The communication unit 17b decrypts the encapsulated security payload (data of the global key AC (for decryption) 14c2) using the local key (for decryption α) 14b1 acquired at step S84 (step S85). The communication unit 17b deletes the local key (for decryption α) 14b1 used for decryption from the storage unit 14b (step S86).

Next, the communication unit 17b acquires the local key (for encryption β) 14b4 from the storage unit 14b (step S87).

Next, the communication unit 17b encrypts the global key AC (for decryption) 14c2 information, which is decrypted at step S85, using the local key (for encryption β) 14b4 by OTP or the like (step S88).

The communication unit 17b then deletes the local key (for encryption β) 14b4 used for encryption from the storage unit 14b (step S89).

Next, the communication unit 17b transmits a global key sharing request to the key management device 1c (step S90). Note that the packet structure of the global key sharing request is as illustrated in Fig. 16 described above.

Next, the communication unit 17b checks the response to the global key sharing request from the key management device 1c (step S91). When the response is a processing result (success), the communication unit 17b transmits the processing result (success) to the key management device 1a as a response to the global key sharing request (step S92). When the response is a processing result (failure), the communication unit 17b transmits the processing result (failure) to the key management device 1a as a response to the global key sharing request (step S93).

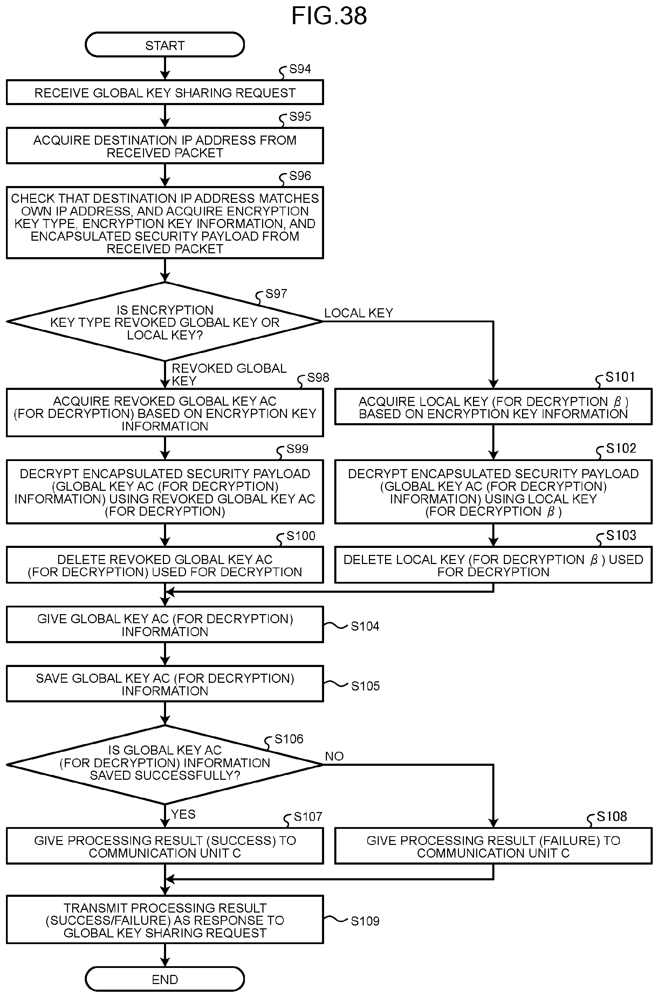

Fig. 38 is a flowchart illustrating an example of processing on a reception side for global key sharing (with relay) according to the second arrangement. Fig. 38 illustrates an example of the processing on the key management device 1c side.

First, the communication unit 17c receives a global key sharing request from the key management device 1b (step S94)

Next, the communication unit 17c acquires the destination IP address from the packet received at step S94 (step S95).

Then, the communication unit 17c checks that the destination IP address acquired at step S95 matches the IP address of the key management device 1c, and acquires the encryption key type, encryption key information, and encapsulated security payload from the received packet (step S96).

Next, the communication unit 17c checks the encryption key type acquired at step S96 (step S97).

When the encryption key type is the revoked global key, the communication unit 17c acquires the revoked global key AC (for decryption) 14c3 from the storage unit 14c based on the encryption key information (step S98). The communication unit 17c decrypts the encapsulated security payload (the global key AC (for decryption) 14c2 information) using the revoked global key AC (for decryption) 14c3 acquired at step S98 (step S99). The communication unit 17c deletes the revoked global key AC (for decryption) 14c3 used for decryption from the storage unit 14c (step S100).

When the encryption key type is the local key, the communication unit 17c acquires the local key (for decryption β) 14c1 from the storage unit 14c based on the encryption key information (step S101). The communication unit 17c decrypts the encapsulated security payload (the global key AC (for decryption) 14c2 information) using the local key (for decryption β) 14c1 acquired at step S101 (step S102). The communication unit 17c deletes the local key (for decryption β) 14c1 used for decryption from the storage unit 14c (step S103).

Next, the communication unit 17c gives the decrypted global key AC (for decryption) 14c2 information to a global key generation unit 16c (step S104).

The global key generation unit 16c saves the global key AC (for decryption) 14c2 information in the storage unit 14c (step S105).

The global key generation unit 16c checks the result of saving the global key AC (for decryption) 14c2 information (step S106). The global key generation unit 16c gives a processing result (success) to the communication unit 17c (hereinafter also referred to a communication unit C) in a case of success (step S107), and gives a processing result (failure) to the communication unit 17c in a case of failure (step S108).

The communication unit 17c transmits, to the key management device 1b, the processing result (success/failure) given from the global key generation unit 16c as a response to the global key sharing request (step S109).

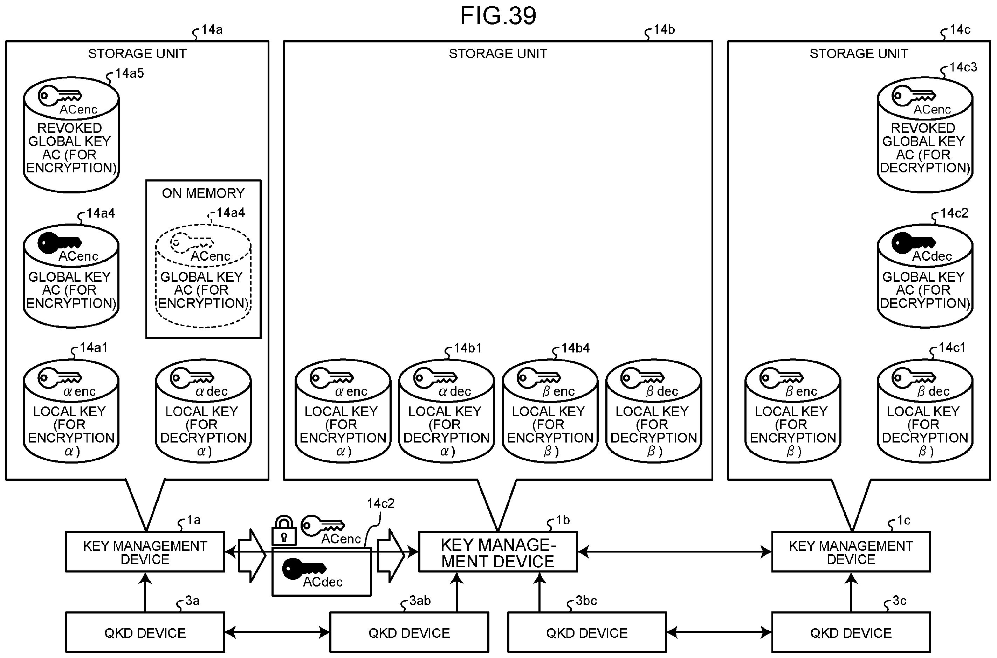

Fig. 39 is a diagram illustrating the global key sharing processing (with relay) using a revoked global key according to the second arrangement. Fig. 39 illustrates the state of the key management devices 1a to 1c when the processing of steps S65 to S74 in Fig. 34 and steps S74-1 to S74-4 in Fig. 35 described above is performed.

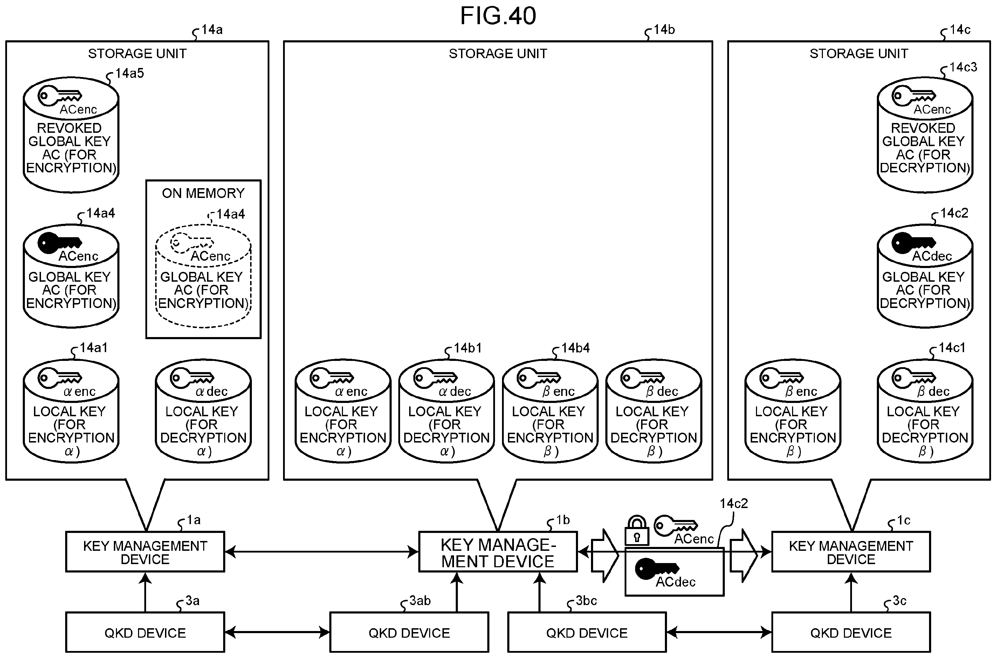

Fig. 40 is a diagram illustrating an example of the global key sharing processing (with relay) using a revoked global key according to the second arrangement. Fig. 40 illustrates the state of the key management devices 1a to 1c when the processing of steps S79 to S83 in Fig. 37 described above is performed.

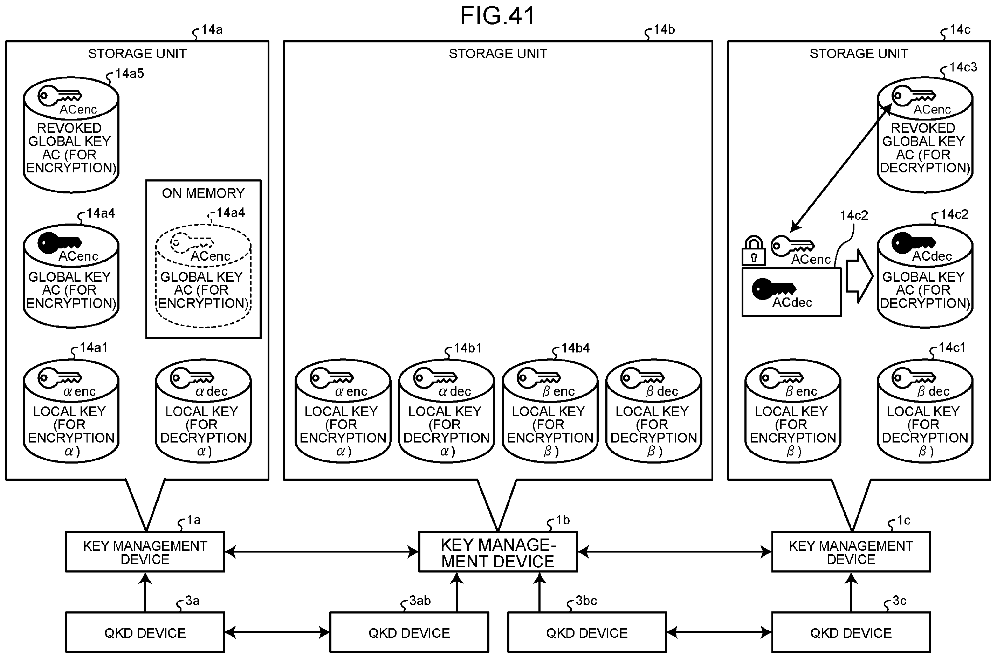

Fig. 41 is a diagram illustrating an example of the global key sharing processing (with relay) using a revoked global key according to the second arrangement. Fig. 41 illustrates the state of the key management devices 1a to 1c when the processing of steps S94 to S100 and steps S104 to S105 in Fig. 38 described above is performed.

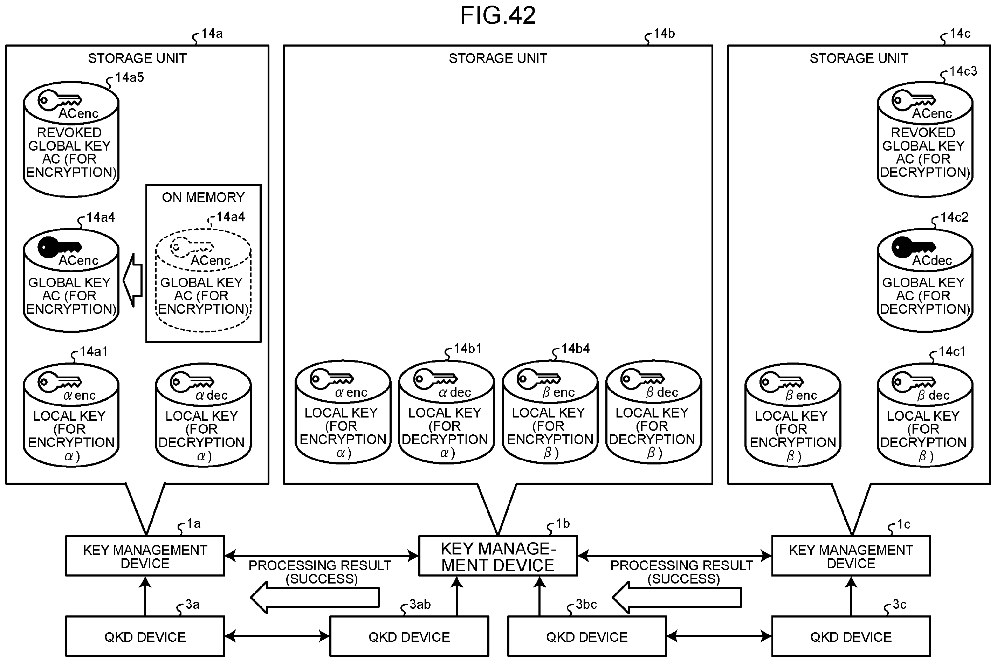

Fig. 42 is a diagram illustrating an example of the global key sharing processing (with relay) using a revoked global key according to the second arrangement. Fig. 42 illustrates the state of the key management devices 1a to 1c when the processing of steps S106 to S107 and S109 in Fig. 38, steps S91 to S92 in Fig. 37, and steps S74-5 to S74-6 in Fig. 35, and steps S76 to S77 in Fig. 34 described above is performed.

### Third Arrangement

Next, a third arrangement will be described. In the description of the third arrangement, explanations similar to those of the second arrangement will be omitted and the portion different from those of the second arrangement will be described. The third arrangement describes a method of performing global key sharing with a key management device at a destination site directly in a configuration of a quantum cryptography communication system that further includes a relay key management device (same configuration as that of the second arrangement in Fig. 22 described above).

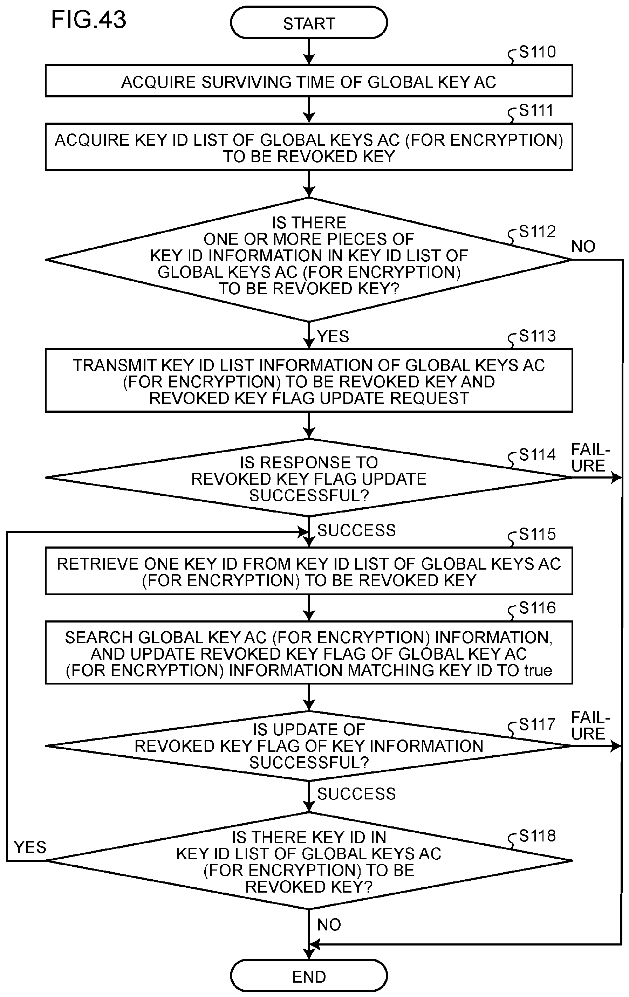

Fig. 43 is a flowchart illustrating an example of processing on a transmission side for updating a global key to a revoked global key without relay according to the third arrangement. Fig. 43 illustrates an example of the processing on the key management device 1a side. The management unit 13a of the key management device 1a periodically executes the processing of Fig. 43.

Steps S110 to S112 are similar to steps S47 to S49 (Fig. 30) of the second arrangement described above, so the explanation thereof will be omitted.

The management unit 13a transmits the key ID list information of the global keys AC (for encryption) to be the revoked key and a revoked key flag update request to the key management device 1c via the communication unit 17a (step S113). In the third arrangement, the key management device 1a directly transmits the key ID list information of the global keys AC (for encryption) to be the revoked key and a revoked key flag update request to the key management device 1c without going (relaying) through the key management device 1b.

Then, the management unit 13a receives a response to the revoked key flag update request from the key management device 1c via the communication unit 17a (step S114). In the third arrangement, the key management device 1a directly receives the response to the revoked key flag update request from the key management device 1c without going (relaying) through the key management device 1b.

Steps S115 to S118 are similar to steps S52 to S55 (Fig. 30) of the second arrangement described above, so the explanation thereof will be omitted.

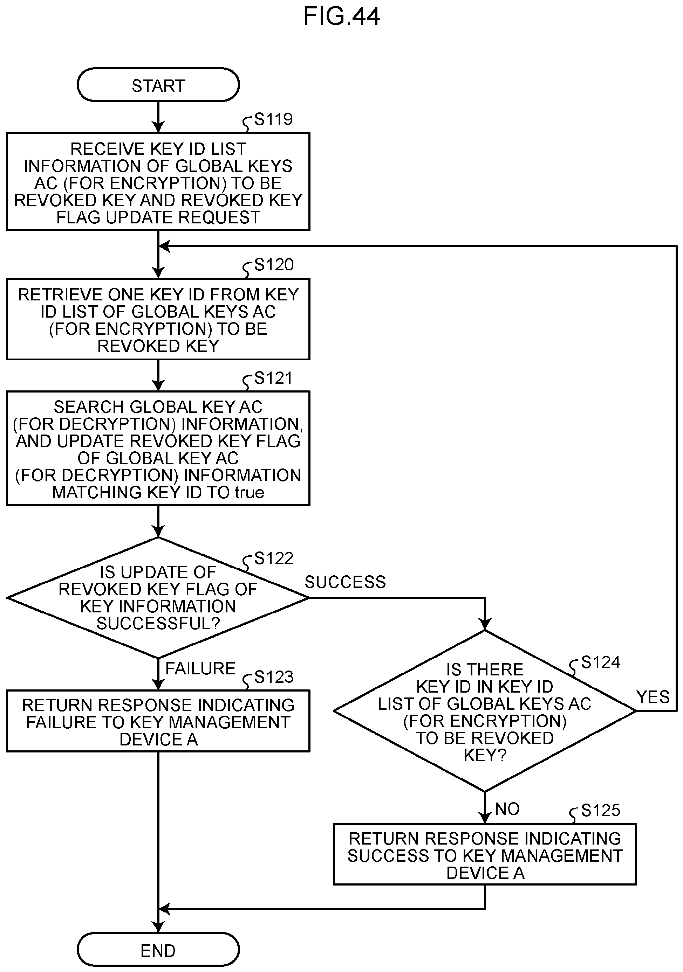

Fig. 44 is a flowchart illustrating an example of processing on a reception side for updating a global key to a revoked global key without relay according to the third arrangement. Fig. 44 illustrates an example of the processing on the key management device 1c side.

Steps S119 to S122 are similar to steps S58 to S61 (Fig. 32) of the second arrangement described above, so the explanation thereof will be omitted.

When update of the revoked key flag is unsuccessful, the management unit 13c returns a response indicating failure to the key management device 1a via the communication unit 17c, and ends the processing (step S123). In the third arrangement, the key management device 1c directly transmits the response to the key management device 1b without going (relaying) through the key management device 1b.

Step S124 is similar to step S63 (Fig. 32) of the second arrangement described above, so the explanation thereof will be omitted.

The management unit 13c returns a response indicating success to the key management device 1a via the communication unit 17c, and ends the processing (step S125). In the third arrangement, the key management device 1c directly transmits the response to the key management device 1b without going (relaying) through the key management device 1b.

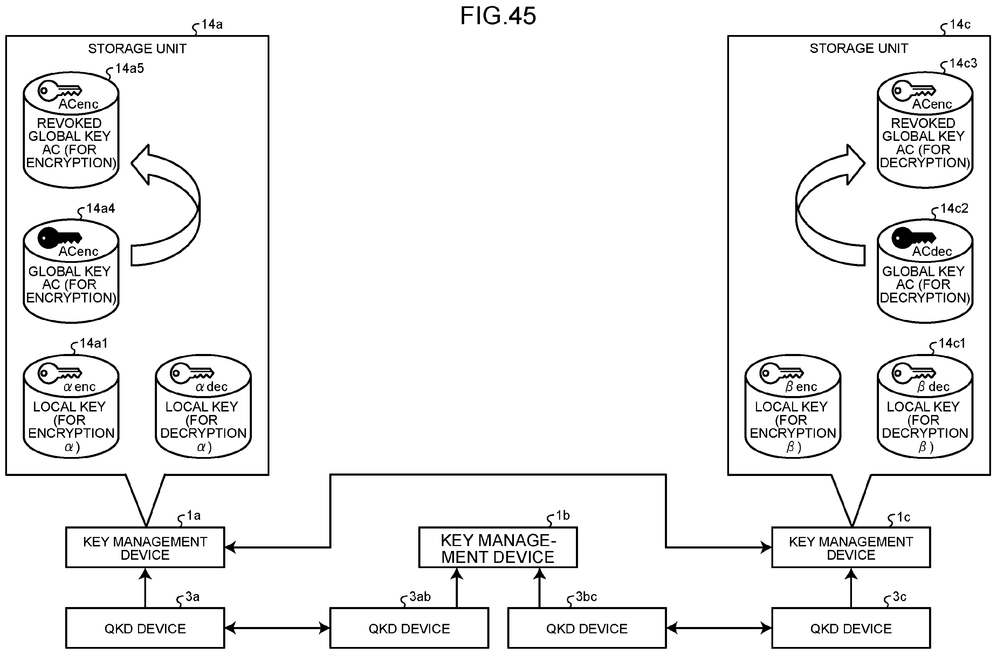

Fig. 45 is a diagram illustrating the state of the key management devices 1a and 1c according to the third arrangement, after performing the processing for updating the global key to the revoked global key without relay. In the third arrangement, the revoked global key AC (for encryption) 14a5 and the revoked global key AC (for decryption) 14c3 are used for implementing new global key sharing.

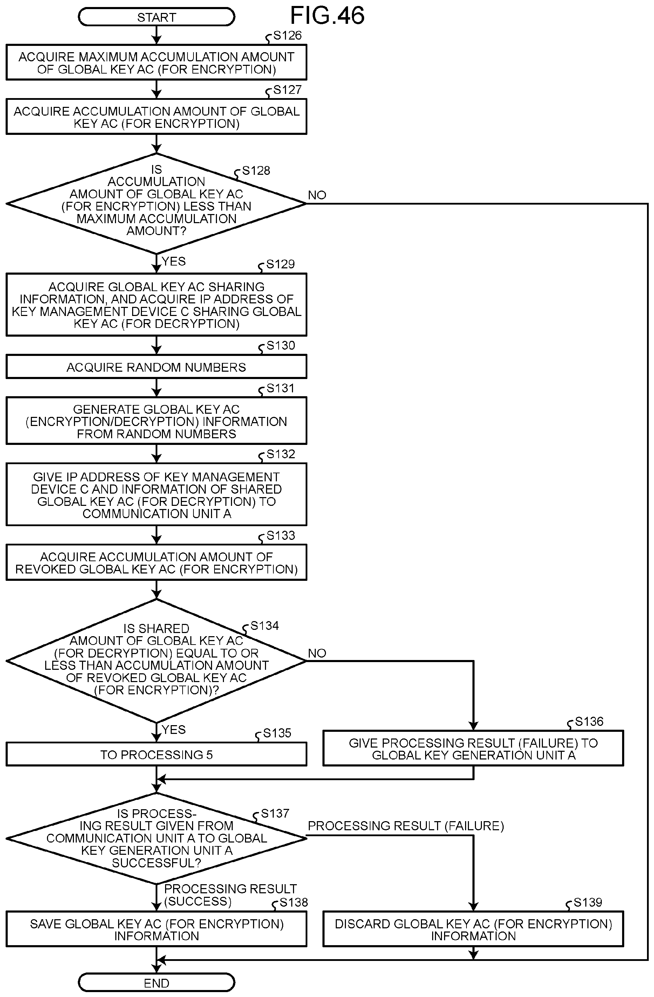

Fig. 46 is a flowchart illustrating an example of processing on a transmission side for global key sharing (without relay) using a revoked global key according to the third arrangement. Fig. 46 illustrates an example of the processing on the key management device 1a side. The global key generation unit 16a of the key management device 1a periodically executes the processing of Fig. 46.

Steps S126 to S133 are similar to steps S65 to S72 (Fig. 34) of the second arrangement described above, so the explanation thereof will be omitted.

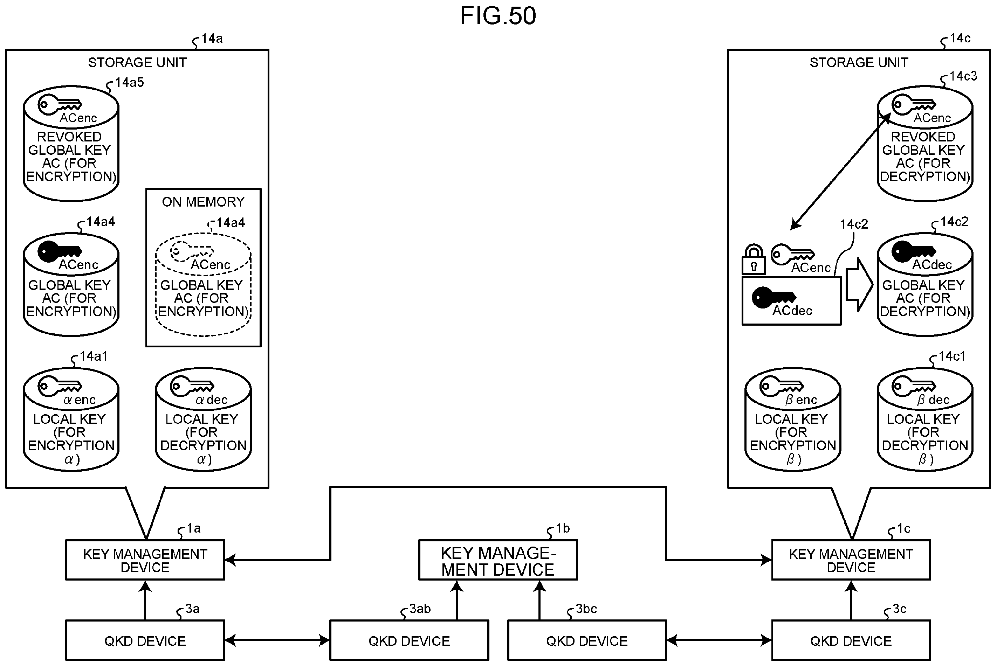

At step S134, when the shared amount of the global key AC (for decryption) 14c2 (the accumulation amount of the global key AC (for encryption) 14a4 in the key management device 1a) is equal to or less than the accumulation amount of the revoked global key AC (for encryption) (Yes at step S134), the processing proceeds to the processing 5 (step S135). When the shared amount exceeds the accumulation amount (No at step S134), the communication unit 17a gives a processing result (failure) to the global key generation unit 16a (step S136). The details of the processing 5 will be described later using Fig. 50.

Steps S137 to S139 are similar to steps S76 to S78 (Fig. 34) of the second arrangement described above, so the explanation thereof will be omitted.

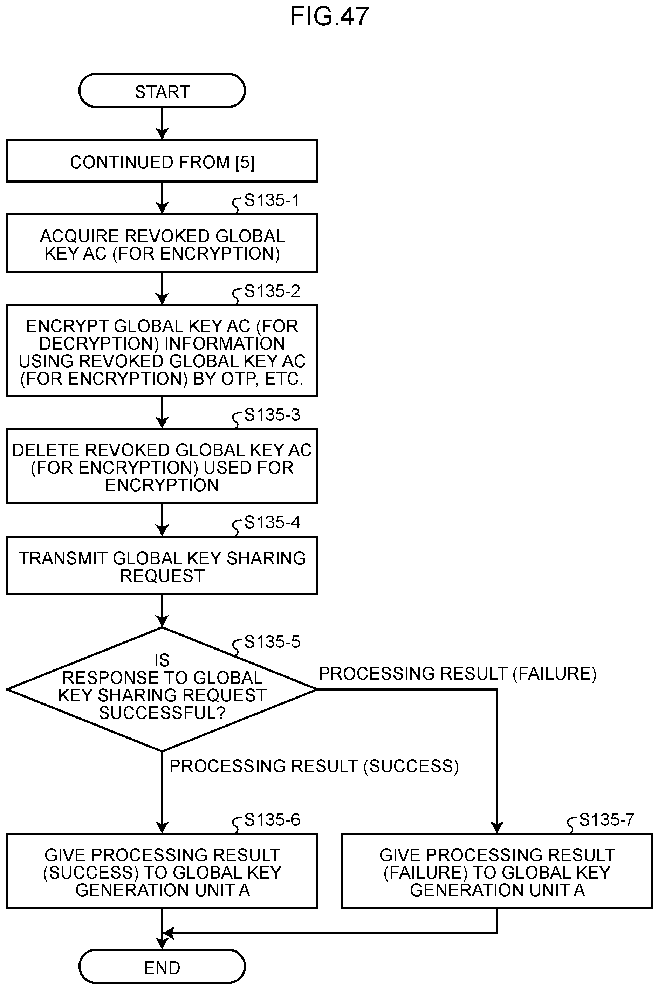

Fig. 47 is a flowchart illustrating an example of the processing 5 on a transmission side for global key sharing (without relay) according to the third arrangement. Fig. 47 illustrates an example of the processing on the key management device 1a side.

Steps S135-1 to S135-3 are similar to steps S74-1 to S74-3 (Fig. 35) of the second arrangement described above, so the explanation thereof will be omitted.

The communication unit 17a then directly transmits a global key sharing request to the key management device 1c without relaying through the key management device 1b (step S135-4). Note that the packet structure of the global key sharing request is as illustrated in Fig. 16 described above.

The global key sharing request at step S135-4 includes the followings.
Encryption key type: revoked global key
Destination IP address: IP address of the key management device 1c
Encryption key information: data of the revoked global key AC (for encryption) used to encrypt the global key AC (for decryption)
Encapsulated security payload: data of the encrypted global key AC (for decryption)

Steps S135-5 to S135-7 are similar to steps S74-5 to S74-7 (Fig. 35) of the second arrangement described above, so the explanation thereof will be omitted.

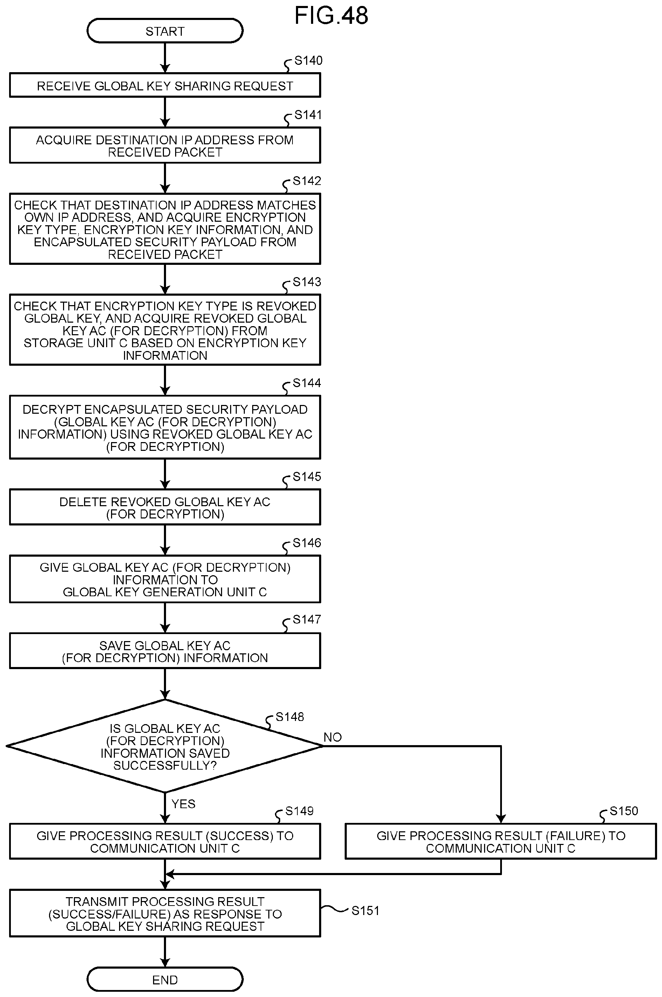

Fig. 48 is a flowchart illustrating an example of processing on a reception side for global key sharing (without relay) according to the third arrangement. Fig. 48 illustrates an example of the processing on the key management device 1c side.

First, the communication unit 17c receives a global key sharing request from the key management device 1a (step S140).

Steps S141 to S142 are similar to steps S95 to S96 (Fig. 38) of the second arrangement described above, so the explanation thereof will be omitted.

The communication unit 17c checks that the encryption key type acquired at step S142 is the revoked global key, and acquires the revoked global key AC (for decryption) 14c3 from the storage unit 14c based on the encryption key information (step S143).

Steps S144 to S150 are similar to steps S99 to S100 and S104 to S108 (Fig. 38) of the second arrangement described above, so the explanation thereof will be omitted.

The communication unit 17c directly transmits the processing result (success/failure) given from the global key generation unit 16c as a response to the global key sharing request to the key management device 1a without going through the key management device 1b (step S151).

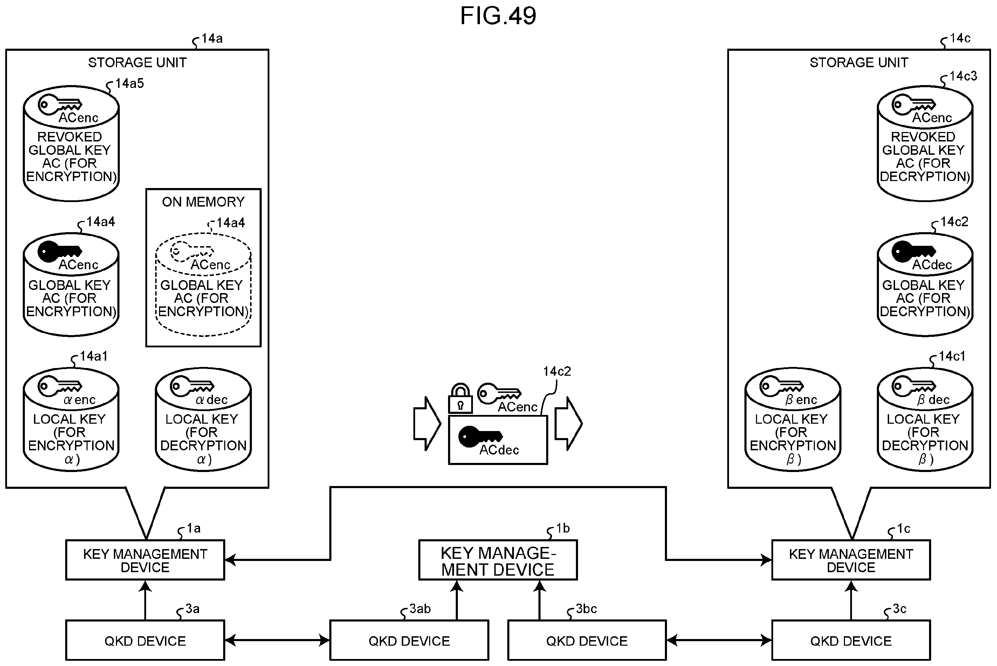

Fig. 49 is a diagram illustrating the global key sharing processing (without relay) using a revoked global key according to the third arrangement. Fig. 49 illustrates the state of the key management devices 1a to 1c when the processing of steps S126 to S135 in Fig. 46 and steps S135-1 to S135-4 in Fig. 47 described above is performed.

Fig. 50 is a diagram illustrating the global key sharing processing (without relay) using a revoked global key according to the third arrangement. Fig. 50 illustrates the state of the key management devices 1a to 1c when the processing of steps S140 to S147 in Fig. 48 described above is performed.

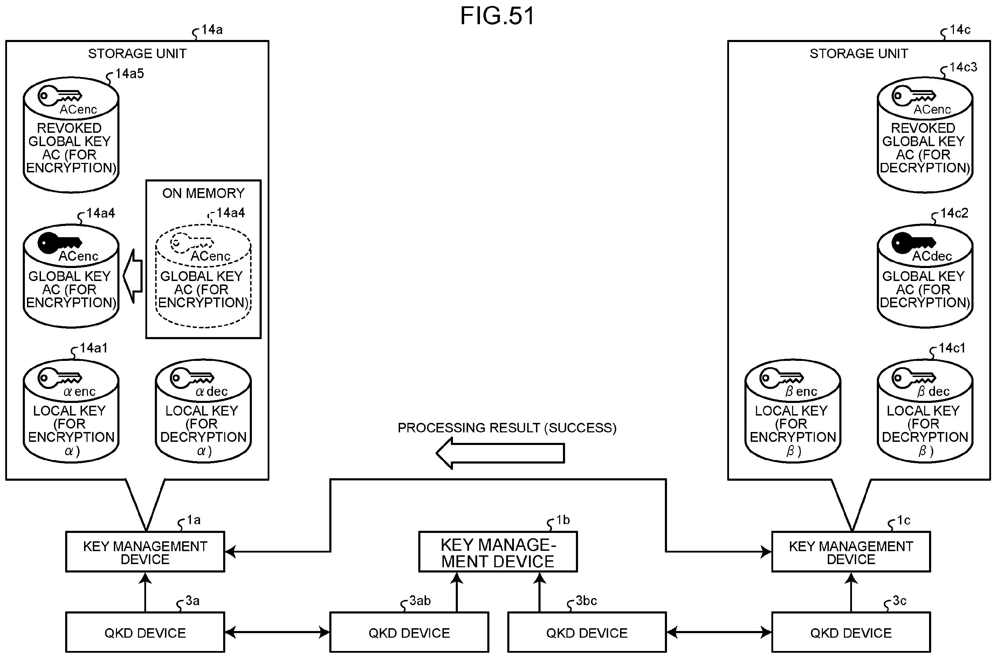

Fig. 51 is a diagram illustrating the global key sharing processing (without relay) using a revoked global key according to the third arrangement. Fig. 51 illustrates the state of the key management devices 1a to 1c when the processing of steps S148 to S149 and S151 in Fig. 48, steps S135-5 to S135-6 in Fig. 47, and steps S137 to S138 in Fig. 46 described above is performed.

As described above, the third arrangement has the advantage that the number of times of encryption/decryption during global key sharing can be reduced since it is possible to communicate directly with the key management device 1 at the destination site. With the conventional method using local keys, it is necessary to perform encrypted transfer via the adjacent key management device 1.

Finally, examples of the hardware configurations of the QKD device 3 and the key management device 1 according to the first to third arrangements will be described.

### Examples of Hardware Configurations

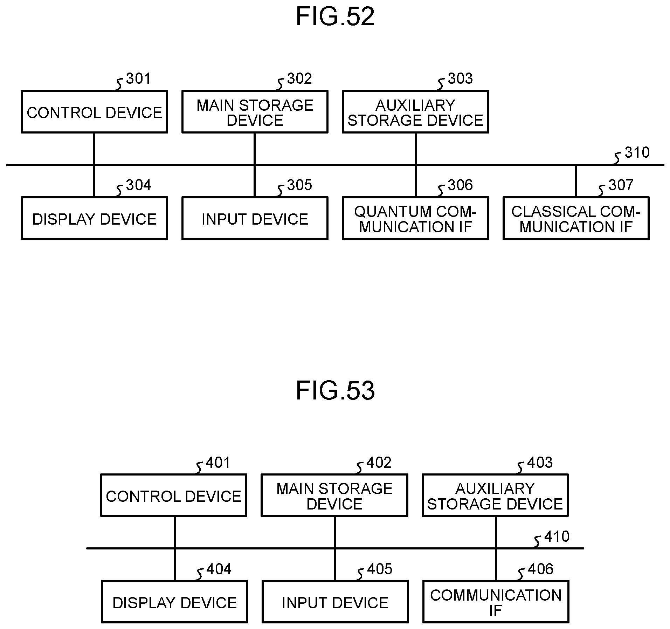

Fig. 52 is a diagram illustrating an example of the hardware configuration of the QKD device 3 according to the first to third arrangements. The QKD device 3 according to the first to third arrangements includes a control device 301, a main storage device 302, an auxiliary storage device 303, a display device 304, an input device 305, a quantum communication IF 306, and a classical communication IF 307.

The control device 301, the main storage device 302, the auxiliary storage device 303, the display device 304, the input device 305, the quantum communication IF 306, and the classical communication IF 307 are connected via a bus 310.

The control device 301 executes a computer program loaded from the auxiliary storage device 303 onto the main storage device 302. The main storage device 302 is a memory such as a ROM and a RAM. The auxiliary storage device 303 is an HDD, a memory card, and the like.

The display device 304 displays the states and the like of the QKD device 3. The input device 305 receives an input from a user. Note that the display device 304 and the input device 305 may be realized by a touch panel or the like having a display function and an input function. Furthermore, the display device 304 and the input device 305 may not be provided in the QKD device 3. In that case, for example, a display function and an input function of an external terminal connected to the QKD device 3 are used.

The quantum communication IF 306 is an interface for connecting to a QKD link through which the photons are transmitted. The classical communication IF 307 is an interface for connecting to a transmission path where control signals are transmitted to the opposite QKD device 3, and to a transmission path and the like communicating with the key management device 1.

Fig. 53 is a diagram illustrating an example of the hardware configuration of the key management device 1 according to the first to third arrangements. The key management device 1 includes a control device 401, a main storage device 402, an auxiliary storage device 403, a display device 404, an input device 405, and a communication IF 406.

The control device 401, the main storage device 402, the auxiliary storage device 403, the display device 404, the input device 405, and the communication IF 406 are connected via a bus 410.

The control device 401 executes a computer program loaded from the auxiliary storage device 403 onto the main storage device 402. The main storage device 402 is a memory such as a ROM and a RAM. The auxiliary storage device 403 is an HDD, a memory card, and the like.

The display device 404 displays the states and the like of the key management device 1. The input device 405 receives an input from a user. Note that the display device 404 and the input device 405 may be realized by a touch panel or the like having a display function and an input function. The display device 404 and the input device 405 may not be provided in the key management device 1. In that case, for example, a display function and an input function of an external terminal connected to the key management device 1 are used.

The communication IF 406 is an interface for connecting to the transmission path.

The computer program executed by the QKD device 3 and the key management device 1 according to the first to third arrangements is a file in an installable format or an executable format, is stored in a computer-readable storage medium such as a compact disc read-only memory (CD-ROM), a memory card, a compact disc recordable (CD-R) and a digital versatile disc (DVD), and is provided as a computer program product.

The computer program executed by the QKD device 3 and the key management device 1 according to the first to third arrangements may be stored on a computer connected to a network such as the Internet and provided by being downloaded via the network.

In addition, the computer program executed by the QKD device 3 and the key management device 1 according to the first to third arrangements may be provided via a network such as the Internet without being downloaded.

The computer program executed by the QKD device 3 and the key management device 1 according to the first to third arrangements may also be provided by being incorporated in a ROM or the like in advance.

Note that some or all of the functions of the QKD device 3 and the key management device 1 according to the first to third arrangements may be realized by hardware such as an integrated circuit (IC). The IC is, for example, a processor that executes dedicated processing.

In addition, in a case where functions are realized by using a plurality of processors, each processor may realize one of the functions or may realize two or more of the functions.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

## Claims

1. A key management device (1) comprising:
a global key generation unit (16, 16a-16c) configured to generate a first global key used for encryption or decryption of communication of an application, and store the first global key shared with another key management device by encrypted transfer using quantum key distribution (QKD) in a storage unit (14; 14a-14c);
a management unit (13; 13a-13c) configured to check an expiration date of the first global key stored in the storage unit (14; 14a-14c), and update the first global key that is expired to a revoked global key;
a communication unit (17; 17a-17c) configured to, when sharing a second global key newly generated by the global key generation unit (16, 16a-16c) with the another key management device, encrypt the second global key using the revoked global key, and transmit the second global key being encrypted to the another key management device; and
a supply unit (11, 11a-11c) configured to supply the second global key to the application.

2. The key management device (1) according to claim 1, wherein the communication unit (17; 17a-17c) transmits an update request including identification information for identifying the revoked global key used for encryption or decryption to the another management device when the first global key that is expired is updated to the revoked global key.

3. The key management device (1) according to claim 1 or 2, wherein, when an accumulation amount of the first global key that is unexpired is equal to or less than an accumulation amount of the revoked global key, the communication unit (17; 17a-17c) uses the revoked global key to encrypt the second global key and transmits the second global key being encrypted to the another management device.

4. The key management device (1) according to claim 1 or 2, further comprising a reception unit configured to receive a local key from a quantum key distribution (QKD) device
that shares the local key with an opposite QKD device by the QKD, wherein
when an accumulation amount of the first global key that is unexpired is not equal to or less than an accumulation amount of the revoked global key, the communication unit (17; 17a-17c) uses the local key to encrypt the second global key and transmits the second global key being encrypted to the another management device.

5. The key management device (1) according to claim 1 or 2, wherein, when transmitting the second global key being encrypted to the another management device, the communication unit (17; 17a-17c) transmits identification information for identifying the revoked global key used for encryption to the another management device.

6. The key management device (1) according to claim 1 or 2, wherein, upon receiving the second global key being encrypted and identification information for identifying the revoked global key used for encryption from the another management device, the communication unit (17; 17a-17c) specifies, from the identification information, a revoked global key for decrypting the second global key being encrypted and uses the specified revoked global key to decrypt the second global key being encrypted.

7. The key management device (1) according to claim 1 or 2, further comprising a random number generation unit configured to generate random numbers to be used for the first global key and the second global key.

8. The key management device (1) according to claim 1 or 2, wherein the communication unit (17; 17a-17c) uses the revoked global key to encrypt the second global key by one time pad (OTP).

9. The key management device (1) according to claim 1 or 2, wherein the communication unit (17; 17a-17c) uses the revoked global key to encrypt the second global key by advanced encryption standard (AES).

10. A key management method implemented by a key management device (1), the method comprising:
generating a first global key used for encryption or decryption of communication of an application;
storing the first global key shared with another key management device by encrypted transfer using quantum key distribution (QKD) in a storage unit (14; 14a-14c);
checking an expiration date of the first global key stored in the storage unit (14; 14a-14c), and updating the first global key that is expired to a revoked global key;
when sharing a second global key newly generated by the global key generation unit (16, 16a-16c) with the another key management device, encrypting the second global key using the revoked global key, and transmiting the second global key being encrypted to the another management device; and
supplying the second global key to the application.

11. A computer program product comprising a computer-readable medium including programmed instructions stored thereon, wherein the instructions, when executed by a computer, cause the computer to function as:
a global key generation unit (16, 16a-16c) configured to generate a first global key used for encryption or decryption of communication of an application, and store the first global key shared with another key management device by encrypted transfer using quantum key distribution (QKD) in a storage unit (14; 14a-14c);
a management unit (13; 13a-13c) configured to check an expiration date of the first global key stored in the storage unit (14; 14a-14c), and update the first global key that is expired to a revoked global key;
a communication unit (17; 17a-17c) configured to, when sharing a second global key newly generated by the global key generation unit (16, 16a-16c) with the another key management device, encrypt the second global key using the revoked global key, and transmit the second global key being encrypted to the another key management device; and
a supply unit (11, 11a-11c) configured to supply the second global key to the application.
